# EUROPEAN PATENT SPECIFICATION

(11) **EP 3 371 956 B1**
(45) Date of publication and mention of the grant of the patent: **10.01.2024**
(21) Application number: 15793762.4
(22) Date of filing: 06.11.2015
(51) Int. Cl.: H04L 67/52, H04L 67/565, H04W 4/02

(54) **GEOMESSAGING SERVER, GEOINFORMATION SERVER AND CORRESPONDING METHODS**
GEOMESSAGING-SERVER, GEOINFORMATIONSSERVER UND ENTSPRECHENDE VERFAHREN
SERVEUR DE GÉOMESSAGERIE, SERVEUR D'INFORMATIONS GÉOGRAPHIQUES ET PROCÉDÉS CORRESPONDANTS

(43) Date of publication of application: 12.09.2018
(73) Proprietor: Telefonaktiebolaget LM Ericsson (PUBL), 164 83 Stockholm (SE)
(72) Inventor: JODLAUK, Gordian, 52146 Wuerselen (DE); DJORDJEVIC, Branko, 52134 Herzogenrath (DE)
(74) Representative: Zacco Sweden AB
(86) International application number: PCT/EP2015/075909
(87) International publication number: WO 2017/076463

(56) References cited:
- US-A1- 2013 217 419
- "Geomessaging Enabler", ETSI DRAFT; ITS-0010025V003, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V 0.0.3, 10 October 2012 (2012-10-10), pages 1-48, XP014073030,
- HAMID MENOUAR ET AL: "Efficient and unique identifier for V2X events aggregation in the Local Dynamic Map", ITS TELECOMMUNICATIONS (ITST), 2011 11TH INTERNATIONAL CONFERENCE ON, IEEE, 23 August 2011 (2011-08-23), pages 369-374, XP032064682, DOI: 10.1109/ITST.2011.6060084 ISBN: 978-1-61284-668-2
- Dr Andreas Festag: "Geocasting over 11p, LTE and beyond over 11p, LTE and beyond", , 8 February 2012 (2012-02-08), XP055133782, Retrieved from the Internet: URL:http://docbox.etsi.org/workshop/2012/2 01202_ITSWORKSHOP/05_MANAGINGTHE5SENSESOFI TS/GEOCASTING_FESTAG.pdf [retrieved on 2014-08-07]
- VARUN SINGH ET AL: "Predictive buffering for streaming video in 3G networks", WORLD OF WIRELESS, MOBILE AND MULTIMEDIA NETWORKS (WOWMOM), 2012 IEEE INTERNATIONAL SYMPOSIUM ON A, IEEE, 25 June 2012 (2012-06-25), pages 1-10, XP032220165, DOI: 10.1109/WOWMOM.2012.6263710 ISBN: 978-1-4673-1238-7

## Description

### TECHNICAL FIELD

Various embodiments relate to a geoinformation server; further embodiments relate to a geomessaging server; further embodiments relate to a client; and further embodiments relate to corresponding methods. In particular, various embodiments relate to techniques of communicating messages between the geoinformation server, the geomessaging server, and the client, the messages comprising payload data. Further embodiments relate to setting an operation parameter of a media stream based on such payload data.

### BACKGROUND

Techniques of aggregating geoinformation on certain of observables locally experienced by clients attached to a wireless network are known. The geoinformation provides spatiallydependent information for various geolocations. E.g., for aggregation of geoinformation, geoinformation servers can be employed which access databases configured to store the geoinformation.

Sometimes, the geoinformation may be specific to the wireless network, e.g., correspond to a quality of a radio link of the wireless network or to the another figure of merit of the wireless network.

Beyond this, geoinformation is conceivable which is not related to the wireless network, but relates to different spatially-dependent observables. A document titled "Geomessaging Enabler" ETSI DRAFT; ITS-0010025V003, EUROPEAN TELECOMMUNICATIONS STANDARDS INSTITUTE (ETSI), 650, ROUTE DES LUCIOLES describes a background art of Geomessaging IMS call flows and data exchange in dowlink. US2013/217419A1 describes a background art of an evolved node b channel quality indicator (CQI) processing for heterogeneous networks.

### SUMMARY

The invention is defined by the independent claims. Furthermore, embodiments of the invention are defined by the claims. Moreover, examples and embodiments, which are not covered by the claims are presented not as embodiments of the invention, but as background art or examples useful for understanding the invention. Therefore, a need exists to distribute such geoinformation from geoinformation servers to clients. In particular, need exists for an architecture for distributing the geoinformation which enables a lean and efficient distribution of the geoinformation.

This need is met by the features of the independent claims. The dependent claims define embodiments.

According to embodiments, a geomessaging server is provided. The geomessaging server comprises at least one interface. The at least one interface is configured to communicate a first message with the geoinformation server. The first message comprises first payload data. The first message further comprises an indicator indicating a given service associated with the first payload data. The first message further comprises an indicator indicating a geolocation associated with the first payload data. The at least one interface is further configured to communicate a second message with a given client. The given client is attached to a wireless network and is associated with a given service. The second message comprises second payload data. The second payload data corresponds to the first payload data. The geomessaging server further comprises at least one processor. The at least one processor is configured to convert between the first message and the second message.

According to embodiments, a geomessaging server is provided. The geomessaging server comprises a memory and at least one processor. The memory contains instructions executable by said at least one processor. The geomessaging server is operative of to communicate a first message with the geoinformation server. The first message comprises first payload data and an indicator indicating a given service associated with the first payload data. The first message further comprises an indicator indicating a geolocation associated with the first payload data. The geomessaging server is further operative to communicate a second message with a given client is attached to a wireless network. The given client is associated with a given service. The second message comprises second payload data. The second payload data corresponds to the first payload data. The geomessaging server is further operative of to convert between the first message and the second message.

According to various embodiments, a client is provided. The client comprises a radio transceiver. The radio transceiver is configured to communicate with a wireless network via a radio link. The client further comprises an interface. The interface is configured to receive, via the radio transceiver and from a geomessaging server, a message. The geomessaging server is attached to the wireless network. The message comprises payload data. The payload data indicates a service quality of at least one of a bearer through at least parts of the wireless network and a media stream through the wireless network. The client further comprises at least one processor. The at least one processor is configured to set an operation parameter of the media stream based on the indicated service quality.

According to various embodiments, a client is provided. The client comprises a memory and at least one processor. Said memory contains instructions executable by said at least one processor. The client is operative to communicate with a wireless network via a radio link; and receive, from a geomessaging server attached to the wireless network, a message comprising payload data. The payload data indicates a service quality of at least one of a bearer through at least parts of the wireless network and a media stream through the wireless network. The client is further operative to set an operation parameter of the media stream based on the indicated service quality.

According to various embodiments, a system is provided. The system comprises a geoinformation server and a geomessaging server. The geomessaging server comprises a memory and at least one processor. The memory contains instructions executable by said at least one processor. The geomessaging server is operative of to communicate a first message with a geoinformation server. The first message comprises first payload data and an indicator indicating a given service associated with the first payload data. The first message further comprises an indicator indicating a geolocation associated with the first payload data. The geomessaging server is further operative to communicate a second message with a given client is attached to a wireless network. The given client is associated with a given service. The second message comprises second payload data. The second payload data corresponds to the first payload data. The geomessaging server is further operative of to convert between the first message and the second message. The geoinformation server comprises a memory and at least one processor. Said memory contains instructions executable by said at least one processor. The geoinformation service is operative to communicate the first message with the geomessaging server. The geoinformation server is operative of to convert between the payload data and geoinformation stored in a database.

According to various embodiments, a system is provided. The system comprises a geomessaging server and a client. The geomessaging server comprises a memory and at least one processor. The memory contains instructions executable by said at least one processor. The geomessaging server is operative of to communicate a first message with a geoinformation server. The first message comprises first payload data and an indicator indicating a given service associated with the first payload data. The first message further comprises an indicator indicating a geolocation associated with the first payload data. The geomessaging server is further operative to communicate a second message with a given client is attached to a wireless network. The given client is associated with a given service.

The second message comprises second payload data. The second payload data corresponds to the first payload data. The geomessaging server is further operative of to convert between the first message and the second message. The client comprises a memory and at least one processor. Said memory contains instructions executable by said at least one processor. The client is operative to communicate with the wireless network via the radio link; and receive, from a geomessaging server attached to the wireless network, the second message comprising the second payload data. The second payload data indicates a service quality of at least one of a bearer through at least parts of the wireless network and a media stream through the wireless network. The client is further operative to set an operation parameter of the media stream based on the indicated service quality.

According various embodiments, a geoinformation server is provided. The geoinformation server comprises an interface. The interface is configured to communicate a message with a geomessaging server. The message comprises payload data. The message further comprises an indicator indicating a given service associated with the payload data. The message further comprises an indicator indicating a geolocation associated with the payload data. The geoinformation server further comprises at least one processor. The at least one processor is configured to convert between the payload data and geoinformation stored in a database.

According to various embodiments, a geoinformation server is provided. The geoinformation server comprises a memory and at least one processor. Said memory contains instructions executable by said at least one processor. The geoinformation service is operative to communicate a message with the geomessaging server. The message comprises payload data and an indicator indicating a given service associated with the payload data. The message further comprises an indicator indicating a geolocation associated with the payload data. The geoinformation server is operative of to convert between the payload data and geoinformation stored in a database.

According to various embodiments, a method is provided. The method comprises communicating a first message between a geomessaging server and a geoinformation server. The first message comprises first payload data. The first message further comprises an indicator indicating a given service associated with the first payload data. The first message further comprises an indicator indicating a geolocation associated with the first payload data. The method further comprises communicating a second message between the geomessaging server and a given client. The given client is attached to a wireless network and is associated with the given service. The second message comprises second payload data. The second payload data corresponds to the first payload data. The method further comprises converting between the first message and the second message.

According to various embodiments, a device is provided. The device comprises means for communicating a first message between a geomessaging server and a geoinformation server. The first message comprises first payload data. The first message further comprises an indicator indicating a given service associated with the first payload data. The first message further comprises an indicator indicating a geolocation associated with the first payload data. The device further comprises means for communicating a second message between the geomessaging server and a given client. The given client is attached to a wireless network and is associated with the given service. The second message comprises second payload data. The second payload data corresponds to the first payload data. The device further comprises means for converting between the first message and the second message.

According to various embodiments, a computer program product is provided. The computer program product comprises program code which can be executed by at least one processor. Executing the program code causes the at least one processor to perform a method. The method comprises communicating a first message between a geomessaging server and a geoinformation server. The first message comprises first payload data. The first message further comprises an indicator indicating a given service associated with the first payload data. The first message further comprises an indicator indicating a geolocation associated with the first payload data. The method further comprises communicating a second message between the geomessaging server and a given client. The given client is attached to a wireless network and is associated with the given service. The second message comprises second payload data. The second payload data corresponds to the first payload data. The method further comprises converting between the first message and the second message.

According to various embodiments, a computer readable storage medium, having stored thereon a computer program, is provided. Execution of the computer program by at least one processor causes the at least one processor to execute a method. The method comprises communicating a first message between a geomessaging server and a geoinformation server. The first message comprises first payload data. The first message further comprises an indicator indicating a given service associated with the first payload data. The first message further comprises an indicator indicating a geolocation associated with the first payload data. The method further comprises communicating a second message between the geomessaging server and a given client. The given client is attached to a wireless network and is associated with the given service. The second message comprises second payload data. The second payload data corresponds to the first payload data. The method further comprises converting between the first message and the second message.

According to various embodiments, a method is provided. The method comprises communicating with the wireless network via a radio link. The method further comprises receiving, from a geomessaging server attached to the wireless network, a message. The message comprises payload data. The payload data indicates a service quality of at least one of a bearer through at least parts of the wireless network and media stream through the wireless network. The method further comprises setting an operation parameter of the media stream based on the indicated service quality.

According to various embodiments, a device is provided. The device comprises means for communicating with the wireless network via a radio link. The device further comprises means for receiving, from a geomessaging server attached to the wireless network, a message. The message comprises payload data. The payload data indicates a service quality of at least one of a bearer through at least parts of the wireless network and media stream through the wireless network. The device further comprises means for setting an operation parameter of the media stream based on the indicated service quality.

According to various embodiments, a computer program product is provided. The computer program product comprises program code which can be executed by at least one processor. Executing the program code causes the at least one processor to perform a method. The method comprises communicating with the wireless network via a radio link. The method further comprises receiving, from a geomessaging server attached to the wireless network, a message. The message comprises payload data. The payload data indicates a service quality of at least one of a bearer through at least parts of the wireless network and media stream through the wireless network. The method further comprises setting an operation parameter of the media stream based on the indicated service quality.

According to various embodiments, a computer readable storage medium, having stored thereon a computer program, is provided. Execution of the computer program by at least one processor causes the at least one processor to execute a method. The method comprises communicating with the wireless network via a radio link. The method further comprises receiving, from a geomessaging server attached to the wireless network, a message. The message comprises payload data. The payload data indicates a service quality of at least one of a bearer through at least parts of the wireless network and media stream through the wireless network. The method further comprises setting an operation parameter of the media stream based on the indicated service quality.

According various embodiments, a method is provided. The method comprises communicating a message between a geoinformation server and a geomessaging server. The message comprises payload data. The message further comprises an indicator indicating a given service associated with the payload data. The message further comprises an indicator indicating a geolocation associated with the payload data. The method further comprises converting between the payload data and geoinformation stored in a database.

According various embodiments, a device is provided. The device comprises means for communicating a message between a geoinformation server and a geomessaging server. The message comprises payload data. The message further comprises an indicator indicating a given service associated with the payload data. The message further comprises an indicator indicating a geolocation associated with the payload data. The device further comprises means for converting between the payload data and geoinformation stored in a database.

According to various embodiments, a computer program product is provided. The computer program product comprises program code which can be executed by at least one processor. Executing the program code causes the at least one processor to perform a method. The method comprises communicating a message between a geoinformation server and a geomessaging server. The message comprises payload date. The message further comprises an indicator indicating a given service associated with the payload data. The message further comprises an indicator indicating a geolocation associated with the payload data. The method further comprises converting between the payload data and geoinformation stored in a database.

According to various embodiments, a computer readable storage medium, having stored thereon a computer program, is provided. Execution of the computer program by at least one processor causes the at least one processor to execute a method. The method comprises communicating a message between a geoinformation server and a geomessaging server. The message comprises payload date. The message further comprises an indicator indicating a given service associated with the payload data. The message further comprises an indicator indicating a geolocation associated with the payload data. The method further comprises converting between the payload data and geoinformation stored in a database.

Furthermore, a carrier comprising one or more of the program codes is provided, wherein the carrier is one of an electronic signal, optical signal, radio signal or computer readable storage medium.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

### BRIEF DESCRIPTION OF THE DRAWINGS

The foregoing and additional features and effects of the invention will become apparent from the following detailed description when read in conjunction with the accompanying drawings, in which like reference numerals refer to like elements.
FIG. 1 is a schematic illustration of a cellular network according to various embodiments, wherein a client is attached to the cellular network via a radio link, wherein the client experiences different spatially-dependent observables.
FIG. 2 is a schematic illustration of geoareas associated with the client according to various embodiments.
FIG. 3 is a schematic illustration of geoareas associated with the client according to various embodiments.
FIG. 4 is a schematic illustration of an architecture for distributing geolocation-specific geoinformation to clients according to various embodiments, the architecture comprising a geoinformation server and a geomessaging server.
FIG. 5A is a schematic illustration of an inter-relationship between a geolocation associated with the geoinformation and a geoarea associated with a client according to various embodiments.
FIG. 5B is a schematic illustration of an inter-relationship between a geolocation associated with the geoinformation and a geoarea associated with a client according to various embodiments.
FIG. 5C is a schematic illustration of an inter-relationship between a geolocation associated with the geoinformation and a geoarea associated with a client according to various embodiments.
FIG. 5D illustrates associations between clients, geoareas, and services according to various embodiments.
FIG. 6 is a schematic illustration of the architecture of FIG. 4 at greater detail and further illustrates an architecture for providing media data by a media stream to the client.
FIG. 7 is a signaling diagram according to various embodiments.
FIG. 8 is a signaling diagram according to various embodiments.
FIG. 9 is a signaling diagram according to various embodiments.
FIG. 10 is a signaling diagram according to various embodiments.
FIG. 11 schematically illustrates a client according to various embodiments.
FIG. 12 schematically illustrates a geoinformation server according to various embodiments.
FIG. 13 schematically illustrates a geomessaging server according to various embodiments.
FIG. 14 is a flowchart of a method according to various embodiments.
FIG. 15 is a flowchart of a method according to various embodiments.
FIG. 16 is a flowchart of a method according to various embodiments.
FIG. 17 is a flowchart of a method according to various embodiments.
FIG. 18 is a flowchart of a method according to various embodiments.
FIG. 19 illustrates a device according to various embodiments.
FIG. 20 illustrates a device according to various embodiments.
FIG. 21 illustrates a device according to various embodiments.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only. The scope of the invention is defined by the appended claims.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, various techniques with respect to sending and / or receiving (communicating) messages between at least some of a geoinformation server, a geomessaging server, a client, and a media server are disclosed. In different disclosed examples, the corresponding communication links between such entities are discussed. E.g., in some embodiments, various aspects with respect to the communication link between the geoinformation server and the geomessaging server are disclosed; in some further embodiments, various aspects with respect to the communication link between the geomessaging server and the client are disclosed; in still further embodiments, various aspects with respect to the communication link between the client and the media server are disclosed. Because messages communicated along the various communication links may differ, examples of converting between the various messages are given.

Such communication links can comprise at least one of a control signalling communication link configured to exchange control messages and a data plane communication link configured to exchange messages comprising payload data.

The communication links can implement packetized communication where messages are conveyed by data packets. Techniques of segmentation and / or aggregation can be employed for mapping messages to packets.

Such communication links can comprise bi-directional and / or uni-directional communication. In examples where the client is involved, the different directions of communicating are sometimes referred to as uplink (UL) communication and downlink (DL) communication. Here, example communication links may provide for at least one of UL communication and DL communication.

The client may be a terminal attached to a wireless network. E.g., the client may be attached to the wireless network via a radio link of the wireless network. Sometimes, the client may be referred to as user equipment (UE). The client may comprise at least one of a smartphone, a tablet, a laptop, a computer, a smart television, a loudspeaker, a cell phone, a mobile phone, a portable computer, a vehicle like for example a car, etc.

The geoinformation server and / or the geomessaging server may be attached to the wireless network. E.g., the geoinformation server and / or the geomessaging server may be attached to the wireless network via an access point node (AP node) configured to establish communication between a core of the wireless network and a packed data network (PDN) comprising the geoinformation server and / or the geomessaging server.

The media server may be attached to the wireless network. E.g., the media server may be attached to the wireless network via an AP node configured to establish communication between the core of the wireless network and a PDN comprising the media server.

The wireless network may be a cellular network comprising a plurality of base station transceivers configured to transceive on the radio link and referred to, hereinafter, as access nodes. The wireless network may operate according to various standards and protocols.

Hereinafter, examples are disclosed are primarily in the context of the Third Generation Partnership Project (3GPP) Long Term Evolution (LTE) Radio Access Technology (RAT) for illustrative purposes only, where the wireless network may be referred to as a cellular network. Similar techniques can be readily applied to various kinds of 3GPP-specified RATs, such as Global Systems for Mobile Communications (GSM), Wideband Code Division Multiplex (WCDMA), General Packet Radio Service (GPRS), Enhanced Data Rates for GSM Evolution (EDGE), Enhanced GPRS (EGPRS), Universal Mobile Telecommunications System (UMTS), and High Speed Packet Access (HSPA). However, operation of the radio links is not limited to the scenario of a cellular network or a 3GPP-specified network. E.g., at least parts of the radio link(s) of the wireless network could be operated according to the Wireless Local Area Network (WLAN or Wi-Fi) RAT, Bluetooth, Near Field Communication, or Satellite communication. It is even possible that different radio links of different cells of the wireless network being implemented by a cellular network are operated according to different RATs.

In some examples related to the communication links between the geoinformation server, the geomessaging server, and the client, respectively, a first message is communicated between the geoinformation server and the geomessaging server and a second message is communicated between the geomessaging server and the client. The first message and the second message comprise payload data which corresponds to each other, i.e., is the same, carries the same or comparable information, and/or can be derived from each other. The first message may differ at least partly from the second message. Thus, the geomessaging server may be configured to convert between the first message and the second message, i.e., from the first message to the second message and / or from the second message to the first message.

In the various examples disclosed herein, converting may comprise changing the data format. Said converting may comprise adding and / or removing information to and from a header of the converted message. Said converting may comprise determining new payload data for the converted message based on the payload data of the received unconverted message. Said converting may comprise determining one or more indicators for the converted message, e.g., based on one or more indicators of the received first or second message and / or based on associations stored, e.g., accessible to the geomessaging server. Said conversion may comprise converting between a client-unspecific first message not directed to one or more specific clients and a client-specific second message which is directed to one or more specific clients, or vice versa. As such, the geomessaging server may be transparent to the payload data and pass on respective information.

In some examples related to the communication link between the geomessaging server and the client, the client is configured to receive, from the geomessaging server, a message comprising payload data. The client may then use the payload data in various ways, e.g., depending on the information comprised in the message. In some examples, the message may indicate a service quality of at least one of a bearer through at least parts of the wireless network or of a media stream through the wireless network; then, the client may be configured to set an operation parameter of the media stream based on the indicated service quality.

In some examples related to the communication link between the geoinformation server and the geomessaging server, the geoinformation server is configured to communicate a message with the geomessaging server, the message comprising payload data. The geoinformation server may be configured to convert between the payload data and geoinformation stored in a database.

Based on examples disclosed herein, various effects may be achieved. Some examples may facilitate information exchange and distribution between the geoinformation server and clients, e.g., depending on geoareas associated with each one of the clients. Hereby, lean and efficient distribution of information may be achieved. In some examples, the distributed information may be used to tailor properties of a media stream or other applications implemented on the client; these properties may be dependent on a geoarea associated with the client.

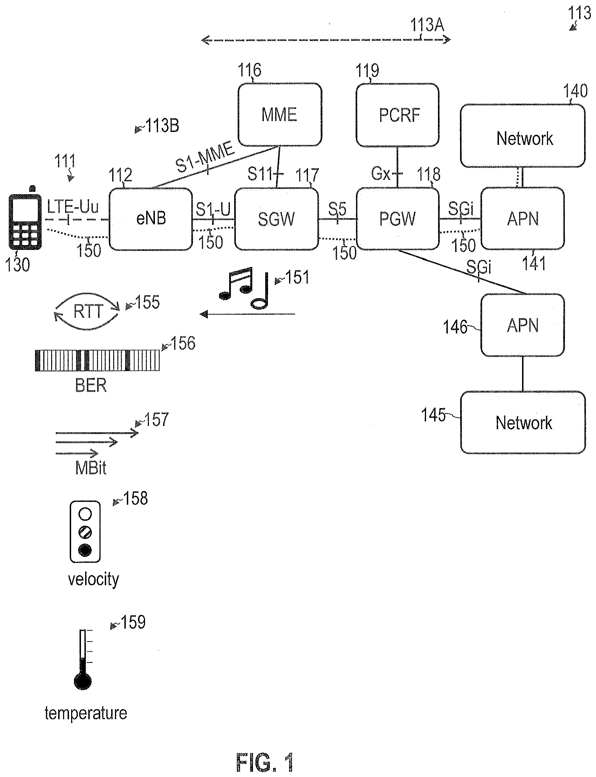

FIG. 1 illustrates aspects of the client 130 being attached to the cellular network 113; in the example of FIG. 1, the cellular network 113 is a 3GPP LTE cellular network. In FIG. 1, the client 130 is connected to a PDN 140 via a bearer 150 and an AP node 141. The PDN 140 may offer an application such a media stream 151 to the client 150 via communicating on the bearer 150.

The PDN 140 may be the Internet. In other scenarios, the PDN 140 may implement an IP Multimedia Subsystem (IMS) and may offer multimedia applications, comprising the media stream 151, to the client 130 via the bearer 150. Other PDNs can be subject to the techniques as described herein.

In the example of FIG. 1, the client 130 is additionally connected to a further PDN 145 via a further bearer (not shown in FIG. 1) and a further AP node 146. The AP nodes 141, 146 may be distinguished by different AP names (APNs). The further PDN 145 may comprise the geoinformation server and/or the geomessaging server. In other examples, the geoinformation server and/or the geomessaging server can be co-located in the same PDN 140 as the media server; then, the client 130 may communicate via one and the same AP node 141 with, both, the geomessaging server and the media server.

E.g., the bearer 150 (illustrated by the dotted line in FIG. 1) may be implemented by a plurality of adjacent sub-bearers and/or secure tunnels. E.g., the bearer 150 may be identified by an Internet Protocol (IP) address of the client 130 assigned by the cellular network 113 to the client 130. E.g., the bearer 150 may be identified by a bearer identification (bearer ID). E.g., the bearer 150 may be referred to as packet data session.

The cellular network 113 may comprise an access node 112. The radio link 111 is established between the access node 112 and the client 130. The bearer 150 is implemented via the radio link 111.

FIG. 1 further schematically illustrates the evolved packet system (EPS) architecture of the LTE RAT. The EPS comprises an evolved packet core (EPC) as core network 113A and the Evolved UMTS Terrestrial Radio Access Network (E-UTRAN) 113B for establishing the radio link 111 in between the client 130 and the EPC 113A. The E-UTRAN is implemented by access nodes (here illustrated by the single access node 112) being for example evolved Node Bs (eNBs).

The bearer 150 is between the client 130, the eNB 112, the EPC 113A, and further the PDN 140. Various sub-bearers 150 can connect these different instances.

The client 130 is attached to the cellular network 113 implementing the EPS and referred to as Home Public Land Mobile Network (HPLMN).

The reference point implemented by the radio link 111 (shown by a dotted line in FIG. 1) between the client 130 and the eNB 112 operates according to the LTE-uU protocol. The bearer 150 may pass along the radio link 111.

The access node 112 is connected to a gateway node implemented by for example a Serving Gateway (SGW) 117. As such, the SGW 117 may route and forward data packets of the data transmission 150 and acts as a mobility anchor of the user plane during handovers of the client 130 between different cells of the cellular network 113. The reference point between the access node 112 and the SGW 117 operates according to the S1-U protocol.

The SGW 117 is connected via a reference point operating according to the S5 protocol to a further gateway node implemented by, e.g., a Packet Data Network Gateway (PGW) 118. The PGW 118 serves as a point of exit and point of entry of the cellular network 113for data packets of the data transmission 150 towards the PDN 140. As such, the PGW is connected with the AP node 141 of the PDN 140 via a reference point operating according to the SGi protocol. The APNs of the AP nodes 141, 146 are used by the client 130 to seek establishment of the bearer 150 towards the PDNs 140, 145.

Access functionalities of the client 130 to the PDNs 140, 145, e.g., access functionality to the bearer 150, may be controlled by a control node implemented by a Mobility Management Entity (MME) 116. The MME 116 is connected via a reference point operating according to the S1-MME protocol with the access node 112. Further, the MME 116 is connected via a reference point operating according to the S11 protocol with the SGW 117. E.g., the MME 116 checks whether the subscriber associated with the client 130 is authorized to establish the bearer 150 by accessing the AP node 141; for this, the APN may be checked. The same may apply for the AP node 146.

Policy and charging functionality of the bearer 150 is controlled by a control node 119 implemented for example by a Policy and Charging Rules Function (PCRF) 119. The PCRF 119 is connected via a reference point operating according to the Gx protocol with the PGW 118. The PGW 118 may implement a Policy and Charging Policy and Charging Enforcement Function (PCEF) which is controlled by Policy and Charging Control (PCC) rules provided by the PCRF 119 via the Gx protocol.

FIG. 1 also illustrates aspects with respect to a service quality of the bearer 150. In different scenarios, the service quality of the bearer 150 may comprise different figures of merit. Examples include a round trip time 155 of communicating between the client 130, the eNB 112, and / or one or more nodes of the EPC 113A; and a bit error rate (BER) 156. Other examples may include a packet error rate (PER); a latency; a packet loss rate; etc. (all not shown in FIG. 1). The service quality of the bearer 150 may be influenced by the service quality of the radio link 111 and / or the service quality of communication links between entities of the EPC 113A.

FIG. 1 also illustrates aspects with respect to a service quality of the media stream 151. In different scenarios, the service quality of the media stream 151 may comprise different figures of merit. Examples comprise a bit rate 157 of media data provided via the media stream 151. Other examples may comprise a media type of the media data of the media stream 151. Further examples comprise a number of the media freezes, e.g., due to expected re-buffering, and average media freezes duration, a number of lost packets, a video quality, a required initial delay for pre-buffering, etc.

E.g., the bit rate 157 may be measured in bits per second. The bit rate 157 may correspond to a potentially time-averaged data throughput of the media data delivered by the media stream 151. The bit rate 157 may correspond to a sampling rate of the media data. Here, typically a higher (lower) bit rate 157 may correspond to a higher (lower) service quality of the media stream 151.

E.g., the media type may correspond to a data format with which the media data is delivered by the media stream. Different media types may correspond to different bit rates 157 and may require different data throughput. The media type may be selected from the group comprising: high definition (HD) video; Full HD video; small definition (SD) video; HD audio; SD audio; still image; and text, Hypertext Markup Language (HTML), . E.g., it is possible that the media server offers certain predefined candidate media types which may be indicated by a stream control message communicated from the media server to the client via the bearer 150.

The service quality 155, 156 of the bearer 150 and the service quality 157 of the media stream 151 may be location-dependent, i.e., they may vary as the client 130 moves through a coverage area of the cellular network 113. They may, therefore, depend on a geoarea associated with the client 130. A geolocation of the client may be located inside the geoarea associated with the client 130; the geoarea may be registered with the geomessaging server. The geoarea may correspond to the precision with which the geolocation of a client 130 is known to the geomessaging server.

Additionally, various further observables encountered by the client 130 may depend on the geolocation of the client 130. Examples comprise: a roadside situation 158 such as traffic velocity, open / closed roads, wiper status; rain status; traffic density; black ice, aquaplaning, and a congestion level; a temperature 159; an air pressure; an emergency information such as a catastrophic warning; etc. E.g., the traffic density may be determined by accumulating "I am here" answers.

As such, the service quality 155 - 157 of the bearer 150 and the media stream 151 may be understood as a particular geolocation-dependent observables related to the cellular network 113. However, other geolocation-dependent observables may not relate to the cellular network 113.

Hereinafter, techniques will be disclosed which enable to provide, to the client 130, geoinformation relating to one or more of such geolocation-dependent observables. E.g., the geoinformation may provide prospective estimates of the geolocation-dependent observables. E.g., the geoinformation may be employed by the client 130 to set operation parameters, e.g., of communicating via the bearer 150, etc.

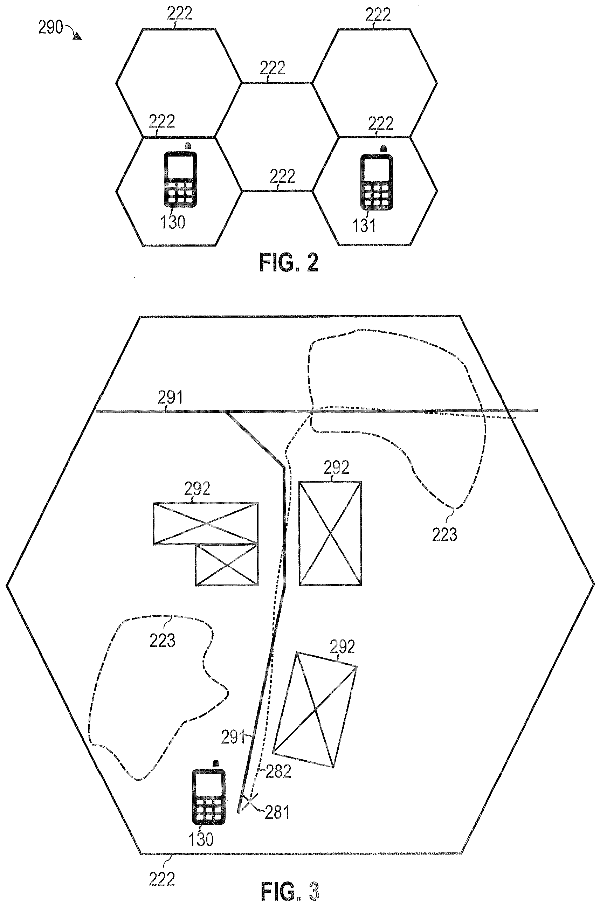

FIG. 2 illustrates clients 130, 131 that are positioned at different geolocations and are thus associated with different geoareas 222. The geoareas 222, in the example of FIG 2, correspond to grid cells of a geogrid 290. In some scenarios, associations may be maintained between the geoareas 222 and the clients 130, 131, e.g., at the geomessaging sever. The associations may link a client 130, 131 to a certain geoarea 222. E.g., when a client 130, 131 moves from a first geoareas 222 to a second geoareas 222, the respective association may be updated by specifying the new geoarea 222. The geoareas 222 represent the granularity with which the geolocation of the clients 130, 131 is known the geomessaging server.

Such geoareas 222 known to the geomessaging server may enable to implement the communication link between the geomessaging server and the client 130, 131 employing geomessages. Geomessages enable to distribute payload data selectively to certain clients 130, 131 located in a given geoarea 222. E.g., a geomessage may be sent to all clients 130, 131 located in a certain geoarea 222. Sometimes, distribution of a geomessage may be further tailored based on subscription to certain services. Then, only if a given client is subscribed to a certain service and is located in a given geoarea 222, a geomessage may be delivered to that given client.

In some scenarios, the geoarea 222 may be defined at the granularity of the grid cell of the geogrid 290. In other scenarios, the geoarea associated with a client 130, 131 may be defined at a finer granularity, i.e., at a sub-grid cell accuracy. This is illustrated in FIG. 3. In FIG. 3, certain geoareas 223 are illustrated which are smaller than a grid cell. The geoareas 223 may be defined by a polygon, e.g., encoded as JavaScript Object Notation (JSON). The areas 223 may be referred to as geofences. They may be specified as geoaddresses comprising in the geomessages distributed to clients 130, 131 located in the respective geoareas 222. Then, logic implemented at the client 130, 131 can check whether the geolocation of the client 130, 131 is within the geoarea 223.

In FIG. 3, an example is illustrated where the client 130 moves along a road 291 between houses 292 and black ice is expected to be encountered at the areas 223. A geomessage comprising a respective warning as geoinformation may be issued. The geomessage may be distributed to all clients in the geoareas 222 and comprise the geofence of the areas 223 as additional geoaddresses. While in this example of FIG. 3, the geoinformation generally correspond to a roadside situation, various techniques disclosed herein may be readily applied to different kinds and types of geoinformation.

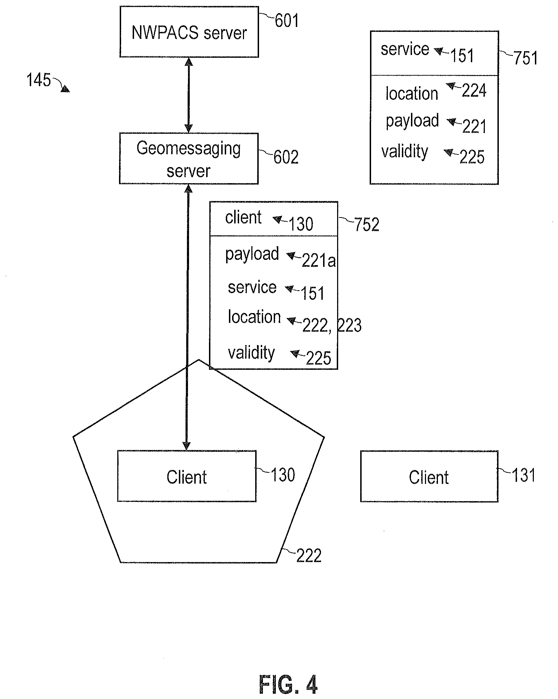

FIG. 4 illustrates aspects of an architecture of a geoinformation server 601 and a geomessaging server 602 allowing for efficient and lean distribution of any kind and type of geoinformation. The geoinformation server 601, sometimes referred to as network performance and application coverage (NWPACs) server, stores and maintains the geoinformation. The geoinformation server 601 communicates with a geomessaging server 602.

For a given service, the geoinformation server 601 communicates a first message 751 comprising certain service-specific first payload data 221 - which is derived from the geoinformation - to the geomessaging server 602. The first message 601 further comprises: an indicator indicating a given service - e.g., the media stream 151 - associated with the first payload data 221; an indicator indicating a geolocation 224 associated with the first payload data 221; and, optionally, an indicator indicating a temporal validity 225 of the first payload data 221.

E.g., the given service may relate to the roadside situation or the media stream 151 or any other geolocation-dependent service. The respective indicator may explicitly or implicitly indicate the service. The indicator may specify the service in terms of a pre-negotiated code or by means of a web address or otherwise. The indicator indicating the given service is, hereinafter, referred to as service indicator.

E.g., the service indicator can be an alpha-numeric series of characters, e.g., an octet string. It may be chosen arbitrarily for each service. In particular, the geoinformation server 601, the geomessaging server 602, as well as the client of 130, 131 may use the same service indicator; e.g., the service indicator space can be synchronized at deployment time. It is conceivable to centrally register service indicators in order to avoid duplicate use of the same service indicator. Conflicts of use may further be avoided if the service indicator comprises, e.g., an Internet domain name which is registered for the respective service or vendor.

The indicator indicating the geolocation 224 may enable to derive the geoarea 222, 223 for which the first payload data 221 is relevant. For this, certain inter-relationships between the indicated geolocation and the geoareas 222, 223 of relevance may be considered. The respective indicator may specify the geolocation in a geoinformation server-specific format or in any other format, e.g., latitude and longitude.

The temporal validity 225 may specify one or more points in time or a time period. The temporal validity may specify a future point in time or time period - e.g., where the geoinformation server prospectively provides first payload data 221 to the geomessaging server 602. The temporal validity may specify an estimated time during which the geoinformation underlying the first payload data 221 is expected to be valid and accurate. The respective indicator may specify the temporal validity explicitly or implicitly. The indicator may specify the temporal validity 225 in terms of a pre-negotiated code or by means of a certain time format.

The first message 751 may not be client-specific, i.e., it may not be addressed to a certain client 130, 131. This enables to implement the geoinformation server 601 to be unaware of which clients 130, 131 are actually subscribed to the service for which the first payload data 221 is provided and / or which clients 130, 131 are actually located in a geoarea 222, 223 to which the first payload data 221 is relevant. This can enable to implement the geoformation server 601 in a lean and efficient manner. Further, the geoinformation server 601 may be versatile and not be tied to certain clients.

Differently, the geomessaging server 602 may have knowledge about the clients 130, 131, i.e., may store associations between the clients 130, 131 and a plurality of services; where the associations may indicate whether a given client 130, 131 is subscribed to a given one of the plurality of services. As such, the associations may link or cross-reference clients 130, 131 and services. Then, the geomessaging server 602 may convert the first message 751 into a second message 752 based on such associations. Here, the first message 751 may be referred to as client unspecific, while the second message 752 may be referred to as client specific. Both, the first and second messages 751, 752 comprise payload data 221 which is indicative of the geoinformation. Because of this, the first and second messages 751, 752 are sometimes referred to as notification messages 751, 752 as they inform clients 130, 131 about geoinformation.

The geomessaging server 602 may also have knowledge about which client 130, 131 is associated with which geoarea 222, 223. Then, based on some inter-relationships between the geolocation 224 associated with the payload data 221 and the geoareas 222, 223 associated with the clients, the geomessaging server can convert between the first and second notification messages 751, 752.

Considering the examples of FIGs. 2 and 3, a situation may occur where both clients 130, 131 are subscribed to the service relating to roadside information. Then, in principle, the first payload data 221 comprised in the first message 751, i.e., the underlying geoinformation, is of relevance to both clients 130, 131.

Alternatively or additionally to taking into account the associations between the clients 130, 131 and the plurality of services, said converting between the first and second notification messages 751, 752 may take into account further factors.

E.g., it may be possible to convert based on associations between the clients 130, 131 and geoareas 222, 223 associated with the clients 130, 131 and further based on the geolocation 224 associated with the first payload data 221. In this regard, the second notification message 752 may be addressed selectively to certain clients 130, 131 where a given inter-relationship between the geoareas 222, 223 associated with the respective clients 130, 131 and the geolocation 224 associated with the first payload data 221 is fulfilled. Alternatively or additionally, a geoaddress corresponding to the given geoarea 222, 223 associated with the respective clients 130, 131 may be comprised in the second notification message 752. This geoaddress may be used for routing purposes, e.g., internally in the geomessaging server 602. Alternatively or additionally, the geoaddress may be used in order to specify the geoarea 222, 223 at a fine granularity and with a high resolution.

E.g., it may be possible to convert based on the temporal validity 225 associated with the first payload data 221. E.g., the conversion may correspond to delaying sending of the second notification message 752, e.g., until a point in time which is indicated as valid by the temporal validity 225. Alternatively or additionally, the conversion may correspond to comprising a respective indicator indicating the temporal validity 225 in the second notification message 752. Comprising the indicator indicating the temporal validity 225 in the second notification message 752 is optional.

By delaying sending of the second notification message 752, it can be ensured that the second message 752 is received by the respective clients 130, 131 when it is actually relevant. For delaying sending of the second notification message 752, the geomessaging server 602 may implement a respective buffer.

By comprising the respective indicator indicating the temporal validity 225 in the second message 752, the respective clients 130, 131 may handle processing of the second payload data 221a as deemed necessary.

Once the conversion has been completed, the second notification message 752 is communicated from the geomessaging server 602 to the client 130, i.e., sent from the geomessaging server 602 to the client 130. The second notification message 752 is communicated as a geomessage, i.e., selectively addressed to some of the clients. E.g., in the scenario of FIGs. 2 and 3, the second notification message 752 may be communicated to the client 130 and not the client 131; this is because the second payload data 221a of the second notification message 752 only has relevance for the client 130 - e.g., because only the client 130 is subscribed to the respective service and / or because on the client 130 is associated with a respective geoarea 222, 223 considered of relevance. E.g., referring to the scenario of FIG. 3, where the second payload data 221a of the second message 752 indicates black ice in the geoareas 223 in which the client 130 is located, there is no need to send the second notification message 752 also to the client 131 located in a different and remote geoareas 222.

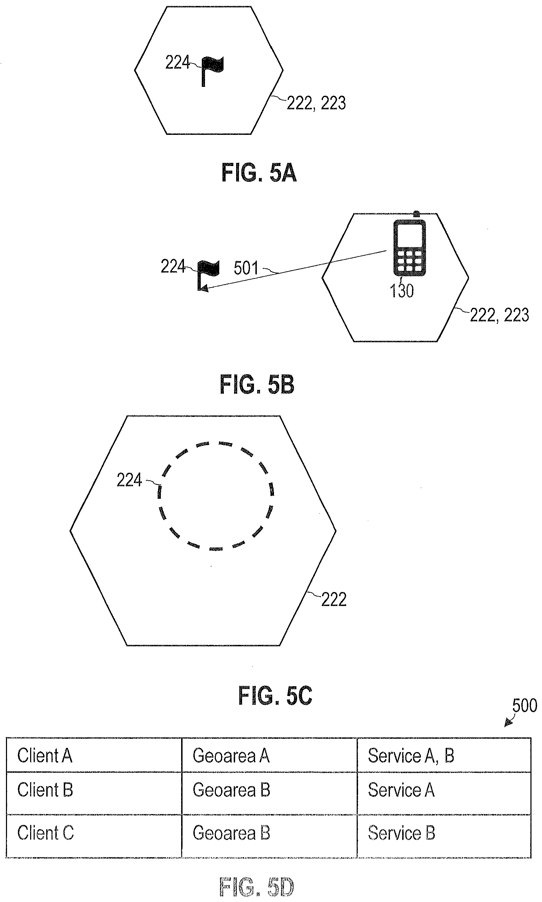

Various kinds and types of inter-relationships between the target geoareas 222, 223 associated with the clients 130, 131 and the geolocation 224 associated with the first payload data 221 data can be considered when converting between the first and second notification messages 751, 752. Corresponding aspects are illustrated in FIGs. 5A- 5C.

FIG. 5A illustrates a scenario where the geolocation 224 associated with the first payload data 221 is located within the geoarea 222, 223 associated with the client 130. Such a scenario may be applicable where it is considered that the geoinformation from which the first payload data 221 is derived is of relevance for those clients 130, 131 which are in close proximity of the corresponding geolocation.

FIG. 5B illustrates a scenario where the geolocation 224 associated with the first payload data 221 is not co-located within the geoarea 222, 223 associated with the client 130. Such a scenario may be applicable where it is considered that the geoinformation from which the first payload data 221 is derived is here of relevance for clients 130, 131 which are not necessarily in close proximity of the corresponding geolocation. E.g., the scenario of FIG. 5B can be implemented in order to prospectively provide the geoinformation to the clients 130, 131; e.g., considering a movement pattern 501 of the clients 130.

Various combinations of the scenarios illustrated by FIGs. 5A and 5B are conceivable. Such dependencies of the geolocation 224 and the geoarea 222, 223 on each other can be flexibly implemented by specifying respective inter-relationships. E.g., such inter-relationships can be considered by that geomessaging server 602 when converting between the first messages 751 and the second messages 752.

Further, it should be understood that the geolocation 224 associated with the first payload data 221 can be provided at different levels of accuracy. E.g., the geolocation 224 can be a point-like location, as illustrated in FIG. 5A and 5B. In other examples, as illustrated in FIG. 5C, it is possible that, e.g., a plurality of geolocations 224 specify a geoarea 223 to be included in the second message 752.

While with respect to FIGs. 5A-5C examples are illustrated where, based on certain inter-relationships, the geoarea 222, 223 to which the second message 752 is targeted is derived from the geolocation 224 indicated by the first notification message 751; in other examples the geolocation 224 of the first notification message 751 may directly indicate the geoarea 222, 223 to which the second notification message 752 is targeted. In some examples, the geomessaging server 601 may map the geolocation 224 to the geoareas 222, 223 such that the geoareas 222, 223 cover the geolocation 224 completely, even if just a small part of the geoarea 222, 224 is touched. In some scenarios, the geolocation 224 may comprise a plurality of geoareas 222, 223, completely or partly.

FIG. 5D illustrates aspects with respect to the associations 500 between the various clients 130, 131 (illustrated in the first column of the table shown in FIG. 5D) and the geoareas 222, 223 associated with the various clients 130, 131, as well as the services associated with the various clients 130, 131 (illustrated in the second and third columns of the table shown in FIG. 5D, respectively). Such associations 500 can be taken into account when converting between the first and second messages 751, 752. Generally, more than a single client 130, 131 can be associated with a single geoarea 222, 223 and / or a single service.

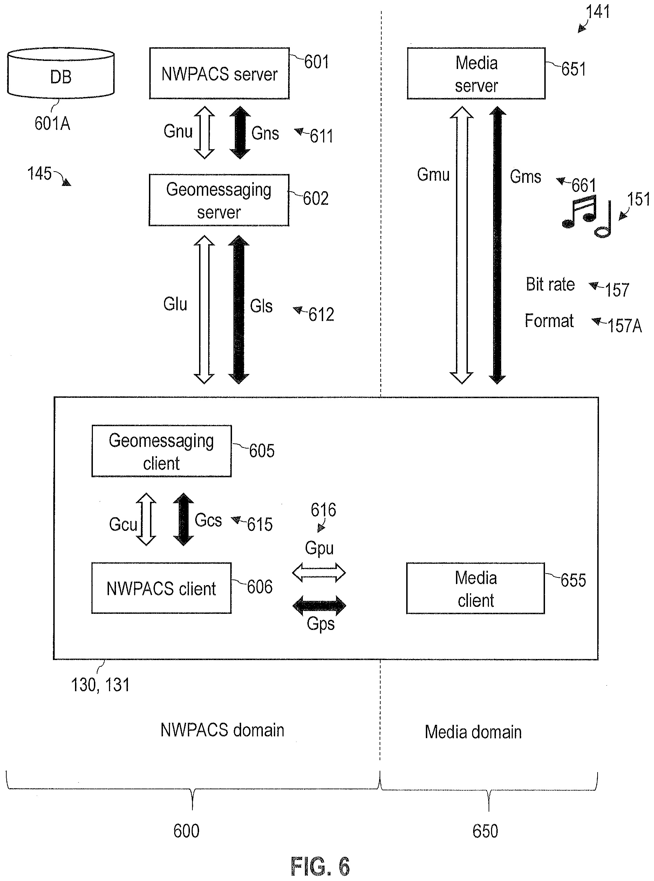

FIG. 6 illustrates aspects of the architecture of the geomessaging server 602 and the geoinformation server 601 at greater detail.

The geoinformation server 601 maintains a database 601A, e.g., a network storage or cloud database or a database integrated in the geomessaging server 601. The database 601A comprises geoinformation that may be, e.g., empirically surveyed or entered manually, etc. The geoinformation can correspond to a service quality of the bearer 150 and/or a service quality 157 of the media stream 151. The geoinformation could also correspond to non-network specific observables such as a roadside situation 158, a temperature 159, etc.

Hence, it may be possible to derive payload data 221 comprised in a first notification message 751 sent to the geomessaging server 602 by conversion of the geoinformation data stored in the database 601A.

E.g., the database 601A may have a specific coverage; e.g., the coverage may correspond to the coverage area of a certain HPLMN. The geoinformation server 601 does not trigger notification messages to individual clients 130, 131. Rather, the geoinformation server 601 computes (for example continuously, periodically or when changes occur) a spatially inclusive and comprehensive first notification messages 751 which are disseminated to clients via the geomessaging system formed by the geomessaging server 602 and respective geomessaging clients 605 implemented as functional entities by the clients 130, 131. E.g., dissemination of the first notification messages 751 may be achieved as a feed of service-specific geotargeted messages. An individual client 130, 131 is not required to be addressed by the geoinformation server 601.

The communication link 611 between the geoinformation server 601 and the geomessaging server 602 may implement a control plane and a data plane. The data plane may be implemented by a reference point Gnu. The control plane may be implemented by a reference point Gns.

The geomessaging server 602 is configured to use spatial addressing to certain geoareas 222, 223, i.e., to implement geomessaging. While the geoinformation server 601 may send, per time, a single first notification message 751 per geoarea 222, 223 - which is identified by the respective geolocation 224 - the geomessaging server 602, according to examples, may send a plurality of second notification messages 752 to all clients 130, 131 located in the respective geoarea 222, 223 which are subscribed to the associated service. In this respect, the geoinformation server 601 may provide as many first notification messages 751 to achieve spatial inclusiveness for the coverage area of the respective service; while the geomessaging server 602 may provide as many second notification messages 752 to achieve client inclusiveness for all clients 130, 131 associated with the respective service. Thus, generally, the number of first notification messages 751 may differ from the number of second notification messages 752.

In particular, as the geoinformation may be associated with the temporal validity 225, it is possible that the amount of geoinformation to be distributed via the first and second notification messages 751, 752 varies as a function of time. The geoinformation server 601 can be configured to determine the temporal validity 225, e.g., based on data stored in the database 601A which is associated by the respective geoinformation.

In one example, the geoinformation server 601 can provide the first notification message 751 to the geomessaging server 602 at a point in time where the corresponding geoinformation is actually valid (beaconing mode). In such a scenario, it may not be required to include an indicator indicating the temporal validity 225 in the first notification message 751. In particular, it is not required that the geomessaging server 602 is aware of a temporal validity 225 of geoinformation comprised in the payload 211 of the notification message 751. E.g., the geomessaging server 602 can be configured to forward the underlying geoinformation by converting from the first notification message 751 to the second notification message 752 and sending the second notification message 750 in a timely manner, i.e., without any artificially introduced delays. Alternatively or additionally, it is also possible that the notification messages 751 comprise the indicator indicating the temporal validity 225 of the payload data 221. In such a scenario, it is possible that the geomessaging server 602 delays sending of the second notification message 752 according to the temporal validity 225. A simple example of a geoinformation comprised in the payload data 221 of the first notification message 751 which is associated with a temporal validity 225 could correspond to: "low performance of the bearer 150 (less than a data rate of 1 megabit per second)" with an associated geolocation 224 corresponding to "New York city limits" and temporal validity 225 corresponding to "8 AM to 10 AM".

The communication link 612 between the geomessaging server 602 and the client 130, 131 may implement a control plane and a data plane. The data plane may be implemented by a reference point Glu. The control plane may be implemented by a reference point GIs.

In some scenarios, that client 130, 131 implements functional entities 605, 606 which correspond to clients associated with the geoinformation server 601 and the geomessaging server 602, respectively. E.g., the geomessaging client 605 communicates with the geoinformation client 606 via a communication link 615 which may implement a control plane and a data plane. The data plane may be implemented by a reference point Gcu and the control plane may be implemented by a reference point Gcs.

E.g., the geoinformation server 601 may provide the first messages 751 as a feed. E.g., the feed may periodically cycle through certain geoinformation associated with the respective service. E.g., the feed may pro-actively provide the first messages 751 to the geomessaging server 602; a request message may not be required. In a manner comparable to the radio receivers tuning into a specific station by frequency, the geomessaging server 602 and / or the geoinformation client 606 can tune into the geoinformation server 601 by a specific service indicator. The entirety of all service indicators is the "spectrum" of the geomessaging system 602, 605. In other examples, the first notification messages 751 may be provided on-demand, e.g., following respective requests from the geomessaging client 605 and / or the geomessaging server 602.

In the scenario of FIG. 6, the combination of the geomessaging server 602 and the geomessaging client 605 enables dissemination of second notification messages 752 in the geoareas 222, 223. Unlike a broadcast system - where typically all notification messages are distributed in the entire coverage area - such a geomessaging system 602, 605 allows each individual second notification message 752 to be addressed/sent to clients 130, 131 associated with an individual geoarea 222, 223. Hence, the geomessaging system 602, 605 can be seen as a transport layer of the architecture of a geoinformation domain 600 formed by the geoinformation server 601 and client 606.

As illustrated in FIG. 6, the communication between the geoinformation server 601 and the geomessaging server 602, as well as between the geomessaging server 602 and the clients 130, 131 is bi-directional. This generally applies to the various examples and scenarios disclosed herein. As such, it is possible that the geomessaging server 602 first receives a second notification message 752 and converts the second notification message 752 into an associated first notification message 751. Said converting may thus be bi-directional.

Converting a second notification message 752 to a first notification message 751 may be used to populate the geoinformation database 601A of the geoinformation server 601. E.g., the second notification message 752 may comprise second payload data 221a which may indicate a measurement report of the respective client 130, 131. The measurement report may comprise location information of the respective client. Depending on the service associated with the second payload data 221a of the second notification message 752, the measurement report may indicate measured values of observables of relevance for the respective service. E.g., considering a service generally related to roadside information, the measurement report may indicate measured values of observables selected from the group comprising: velocity; temperature; air pressure; still images of a surrounding of the client; etc.

Converting from the second notification message 752 to the first notification message 751 may correspond to discarding any client-specific information and may, alternatively or additionally, rely on inverse inter-relationships as explained with respect to FIGs. 5A- 5C.

FIG. 6 further illustrates details of aspects relating to the media stream 151. In detail, FIG. 6 illustrates the media server 651 which provides the media data to the functional entity of the media client 655 implemented by the client 130, 131. The media server 651 and client 655 form a media domain 650.

The respective communication link 661 may implement a data plane reference point Gmu and a control plane reference point Gms. The client 130 may be configured to set an operation parameter of the media stream 151 based on the service quality indicated by the received second notification message 752. As explained above, various operation parameters may be set, comprising the data rate 157 and the media type 157A.

As can be seen from the discussion of FIG. 6, the techniques disclosed herein enable to implement a split architecture. In particular, the geoinformation domain 600 is separated from the media domain 650. A dependency of the media server 651 on particularities of the geoinformation domain 600 is avoided. This facilitates a lean, efficient, and fail-safe implementation of geolocation-dependent setting of operation parameters of the media stream 151. In particular, a direct communication between the geoinformation server 601 and the geomessaging server 602 on the one hand side, and the media server 651 on the other hand side is not required.

Instead, the client 130 can form the interface between the geoinformation domain 600 and the application domain 650. This may be achieved by the data plane interface Gpu and the control plane interface Gps on a communication link 616 between the geoinformation client 606 and the media stream client 655.

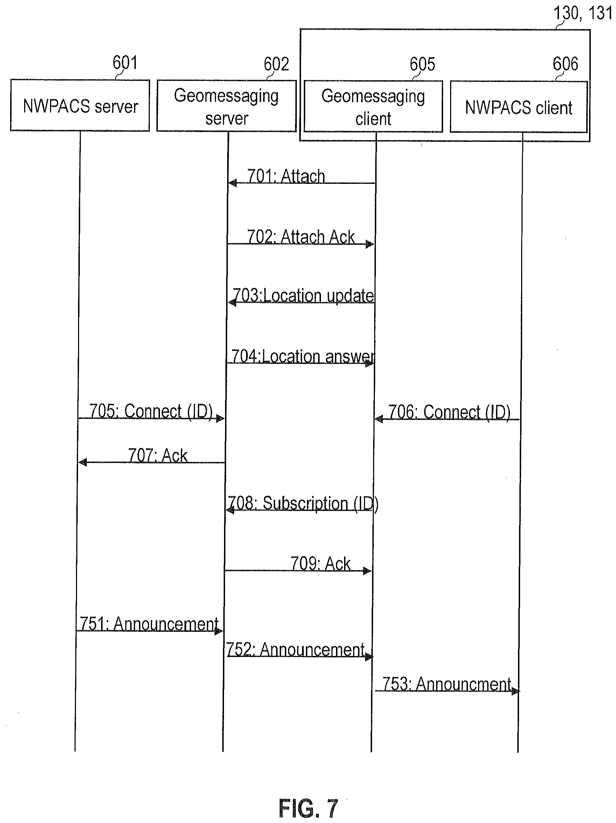

Now turning to FIG. 7, details of communication between the various entities 601, 602, 605, and 606 are illustrated.

The geomessaging client 605 attaches to the geomessaging server 602 by sending a respective control message 701. The geomessaging server 602 responds by sending a respective acknowledgment control message 702.

Then, the geomessaging client 605 sends a location update control message 703 which is acknowledged by the geomessaging server 602 by a respective location answer control message 704. The location update control message 703 specifies a current geolocation of the client 130, 131, e.g., with respect to a geoarea 222, 223. It is possible that the geomessaging server 602 sets the respective associations 500 between the plurality of clients 130, 131 and the plurality of geoareas 222, 223 based on the location update control message 703.

From time to time, the geomessaging client 605 can send respective location update control messages 703 (not shown in FIG. 7). This facilitates keeping the stored associations 500 up-to-date.

At this point, the geomessaging client 605 is attached to the geomessaging server 602. The geomessaging system 602, 605 is ready to implement transport layer-functionality for the geoinformation system 601, 606.

Next, the geoinformation server 601 is attached to the geomessaging server 602 using a dedicated service indicator; a respective control message 705 is used to establish a connection and optionally authenticate. The geomessaging server 602 responds with the acknowledgment control message 707. Various protocols may be used, e.g., based on HTTP/Transport Control Protocol (TCP). Reverse Asynchronous JavaScript and XML (AJAX) may be used.

Also, the geomessaging client 605 of the respective client 130, 131 enables registering the geoinformation client 606 at the geomessaging server 602 using the service indicator. Respective control messages 706, 708 are illustrated in FIG. 7; the control message 708 comprises the service indicator. The geomessaging server 602 responds with an acknowledgment control message 709. The registration may also happen at an earlier stage, for example when the geomessaging client 605 attached to the geomessaging server 602.

The geoinformation client 606 can now receive notification messages 751, 752, 753 from the geoinformation server 601 via the data plane reference point; this is achieved by converting a first notification message 751 received by the geomessaging server 602 into a second notification message 752 and sending on the second notification message 752 to the client 130, 131. The geomessaging client 605 can then optionally convert the second notification message 752 to a third notification message 753 which is provided to the geoinformation client 606. The second notification message 752 comprises the service indicator; thereby, the client 130, 131 can recognize the second message 752 as belonging to the respective subscription and then may execute appropriate actions - such as setting an operation parameter of the media stream 151. By means of the notification messages 751, 752, 753, the client 130, 131 regularly obtains updates on certain geoinformation associated with the subscribed service.

E.g., in scenarios where a higher accuracy is desired with respect to the geoarea 222, 223 than provided by a grid cell, it is possible that the second notification message 752 comprises a geoaddress specifying the geolocation 224. At the geomessaging server 602 the decision may be taken to either include geoarea 223 as a geoaddress in second message 752 if the geoarea 222 corresponding to a certain grid cell is not completely covered by geolocation 224, or to exclude it otherwise. In certain examples, no geoaddress needs to be added to second message 752 if a geoarea 222 corresponding to a grid cell is fully covered by geolocation 224. In such a scenario, it is possible that the geomessaging client 605 compares the geoaddress with the current location of the client 130, 131 and selectively executes respective settings depending on the comparison, e.g., selectively executes said setting of the operation parameter of the media stream 151 depending on said comparing. Said comparing can be based on inter-relationships as illustrated above with respect to FIGs. 5A- 5C.

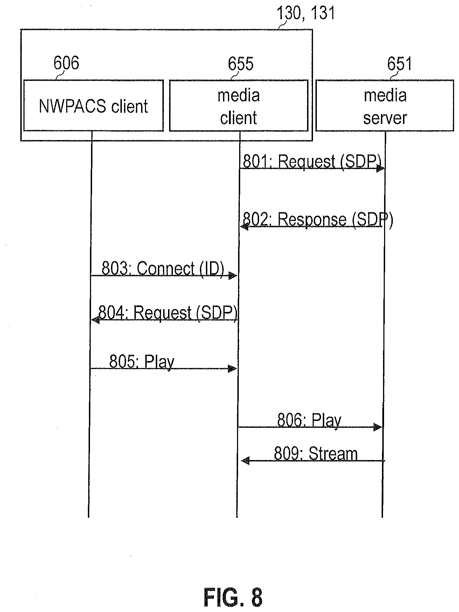

Next, turning to FIG. 8, details of a specific application of the above-disclosed techniques for controlling operation parameters of the media stream 151 are illustrated. First, the media client 655 sends a control message 801 to the media server 651. The control message 801 requests certain media data. Sometimes, the control message 801 is referred to as a request for a session description protocol (SDP), see The Internet Engineering Task Force (IETF) Request For Changes (RFC) 4566 (2006).

Next, the client 130, 131 receives a stream control message 802, sometimes referred to as the SDP. The stream control message 802 indicates the SDP, e.g., a plurality of candidate operation parameters of the media stream 151. The client 130, 131 can then set the operation parameter of the media stream 151 by selecting the operation parameter from the indicated plurality of candidate operation parameters of the media stream 151.

For this, the media client 655 connects with the geoinformation client 606 by receiving a respective control message 803 which specifies the service indicator. The media client 655 then sends a control message 804 indicating the candidate operation parameters of the media stream 151, i.e., the SDP. The geoinformation client 606 responds with a control message 805 which instructs the media client 655 to initiate the media stream 151 based on certain operation parameter selected from the candidate operation parameters as indicated by the control message 804. This triggers sending of the play control message 806 from the media client 655 to the media server 651; in response to the play control message 806, media data 809 is streamed from the media server 651 to the media client 655, i.e., the media stream 151 is initialized.

It should be understood that the distribution of logic, in particular of the internal entities 655, 606 can vary for different scenarios. E.g., while in the scenario FIG. 8 the selecting of the operation parameter of the media stream 151 from the candidate operation parameters is implemented by the geoinformation client 606, in other examples said selecting may be implemented by the media client 655.

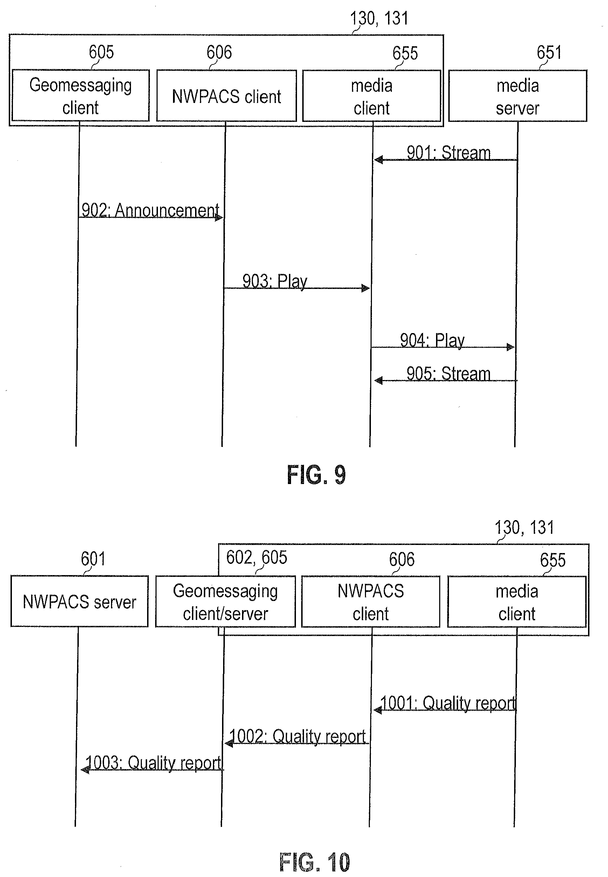

FIG. 8 illustrates a scenario where the media stream 151 is initialized with correspondingly set operation parameters. Scenarios are conceivable where operation parameters of the media stream 151 are set or updated while media data is being streamed, i.e., after the media stream 151 has been initialized. Such a scenario of setting the operation parameters of the media stream 151 during streaming is illustrated by FIG. 9. As can be seen, media data 901 is initially received by the media client 655 from the media server 651. The media stream 151 is already initialized. Next, a notification message 902 is received by the geoinformation client 606, e.g., in response to the client 130, 131 receiving a second notification message 752 (not shown in FIG. 9). The geoinformation client 606 then takes the decision to update the operation parameters of the media stream 151 based on the first payload data 221 of the notification message 902 and issues a respective control message 903 to the media client 655. The media client 655 informs the media server 651 correspondingly by means of the play control message 904. The media server 651 then adapts the operation parameter according to the control message 904 and adjusts the media stream 151 accordingly; the respective media data 905 is then received by the client 130, 131.

A situation as illustrated with respect to FIG. 8 may occur where the client 130, 131 is moving into a new geoarea 222, 223 or when temporal validity period starts/end or when a service degradation/improvement at the position of the client is been reported. E.g., the new geolocation of the client 130, 131 may be located in a geoarea 222, 223 which is associated with degraded service quality of the media stream 151. Then, it could be possible that the respective second notification message 752 and the notification message 902 comprise payload data which indicates the degraded service quality of the media stream 151 as geoinformation. E.g., the degraded service quality of the media stream 151 could correspond to HD video not being able to be streamed satisfactorily. Then, the geoinformation client 606 can choose an alternative by selecting a media type of the media stream 151 corresponding to a less demanding media quality; example could be audio. Then, the media client 655 can be controlled to start playing the media stream 151 based on audio media data and stop playing the media stream 151 based on the HD video media data. It is possible to implement said switching between the different media types of the media stream 151 such that no significant or a non-perceivable delay occurs. E.g., the delay may be on the sub-millisecond or sub-second time scale.

FIG. 10 illustrates aspects of sending notification messages 1001 - 1003 from the client 130, 131 to the geoinformation server 601 in an UL direction. Here, a measurement report is indicated by the notification messages 1001 - 1003 which may be used to populate and update the database 601A.

The media client 655 provides a first notification message 1001 comprising a measurement report indicating the service quality of the media stream 151 for a respective media playback to the geoinformation client 606, e.g., in a reoccurring manner or after a track has finished or when the geolocation of the client 130, 131 has changed significantly. Then, respective second and first notification messages 1002, 1003 are sent via the geomessaging system 602, 605 to the geoinformation server 601. The measurement report can comprise the respective geoarea 222, 223 associated with the client 130, 131 and/or the service indicator. In some examples, the measurement report may be sent anonymously such that sensitive data associated with a subscriber of the client 130, 131 may not be compromised.

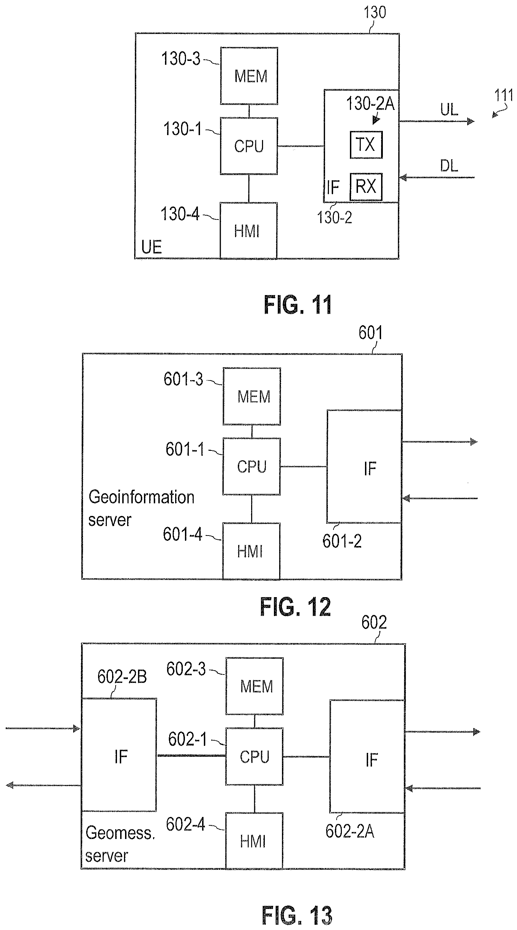

FIG. 11 is a schematic illustration of a client 130, 131. The client comprises a processor 130-1, e.g., a multi-core processor. The client 130, 131 further comprises an interface 130-2 for communicating with a geomessaging server 602. The interface 130-2 comprises a transceiver configured for communicating on the radio link 111. The transceiver 130-2A may comprises a transmitter (labelled TX in FIG. 11) and a receiver (labelled RX in FIG. 11). The client 130, 131 further comprises a memory 130-3, e.g., a non-volatile memory. The client 130, 131 further comprises a human machine interface (HMI) 130-4 configured for inputting information from a user and outputting information to a user. The memory 130-3 may store program code that can be executed by the processor 130-1. Executing the program code 130-1 can cause the processor 130-1 to perform techniques as disclosed herein, e.g., regarding the receiving of the second notification message 752, setting of an operation parameter of the media stream 151, sending of a second notification message 752 which may include a measurement report, etc.

FIG. 12 is a schematic illustration of a geoinformation server 601. The geoinformation server 601 comprises a processor 601-1, e.g., a multi-core processor. The geoinformation server 601 further comprises an interface 601-2 for communicating with a geomessaging server 602 and optionally with an external database 601A. The geoinformation server 601 further comprises a memory 601-3, e.g., a non-volatile memory. The geoinformation server 601 may further comprises an HMI 601-4 configured for inputting information from a user and outputting information to a user. The memory 601-3 may store program code that can be executed by the processor 601-1. Executing the program code can cause the processor 601-1 to perform techniques as disclosed herein, e.g., regarding the converting between geoinformation and a payload of a first notification message 751, which may comprise a temporal validity 225, a service indicator, and/or a geolocation 224 in the first notification message 751, receiving a first notification message 751, updating and / or populating the database 601A, etc.

FIG. 13 is a schematic illustration of a geomessaging server 602. The geomessaging server 602 comprises a processor 602-1, e.g., a multi-core processor. The geomessaging server 602 further comprises a first interface 602-2A for communicating with the geoinformation server 601. The geomessaging server 602 comprises a second interface 602-2B for communicating with the client 130, 131. The geomessaging server 602 further comprises a memory 602-3, e.g., a non-volatile memory. The memory 602-3 may store the associations 500 between the clients 130, 131 and the services and / or the geoareas 222, 223 associated with the clients 130, 131. The geomessaging server 602 further comprises an HMI 602-4 configured for inputting information from a user and outputting information to a user. The memory 602-3 may store program code they can be executed by the processor 602-1. Executing the program code can cause the processor 602-1 to perform techniques as disclosed herein, e.g., regarding the converting between the first and second notification messages 751, 752, delaying of sending of a second notification message 752 based on an indicator temporal validity, etc. While in FIG. 13 two interfaces 602-2A, 602-2B are shown, in other embodiments a single interface can be implemented.

In some scenarios, the program code may be provided on a readable storage medium such as an electronic memory like RAM, ROM, EEPROM, flash memory, magnetic tape, CD-ROM, DVD, Blueray, USB stick, etc.

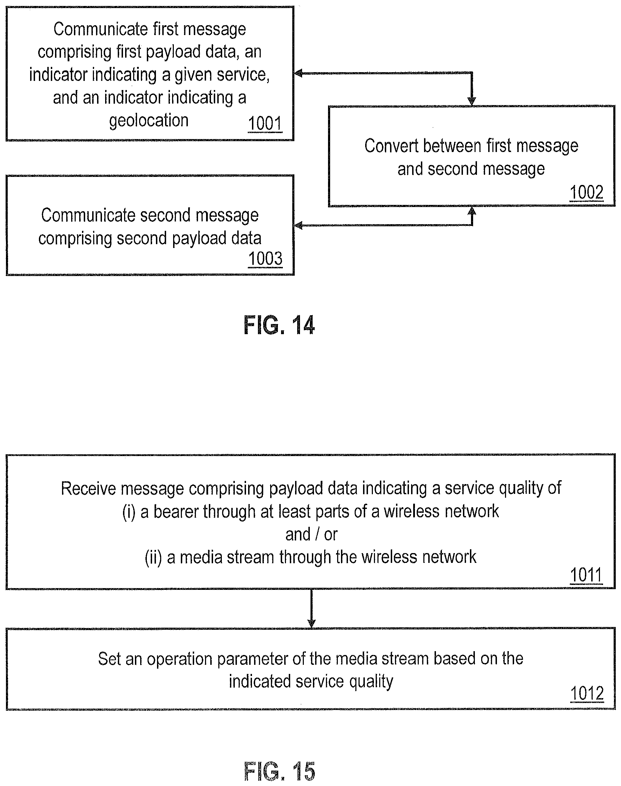

FIG. 14 is a flowchart of a method according to various embodiments. E.g., the method according to FIG. 14 can be executed by the processor 602-1 of the geomessaging server 602. A first notification message 751 is communicated at 1001. The first notification message 751 comprises the indicator indicating the given service and the indicator indicating a geolocation; both the given service and the geolocation 224 are associated with the respective first payload data 221.

A second notification message 752 is communicated at 1003. The second notification message 752 comprises second payload data 221a. Optionally, the second notification message 752 may comprise the indicator indicating the given service and/or an indicator indicating a geoarea 222, 223, i.e., a geoaddress, which may further comprise a validity time indicator.

At 1002, conversion between the first notification message 751 and the second notification message 752 takes place. The conversion can correspond to a change of the data format of the notification messages 751, 752, adding/removing of indicators, etc. In particular, as part of the conversion of 1002 associations 500 between the respective service associated with the first and second notification messages 751, 752 and clients 130, 131 can be considered, e.g., for routing. Further, as part of the conversion of 1002, associations 500 between the respective geoareas 222, 223 and clients 130, 131 can be considered, e.g., for routing.

In some examples, first, the first notification message 751 may be received at 1001 and then, second, the second notification message 752 may be sent at 1003. In other examples, first, the second notification message 752 may be received at 1003 and then, second, the first notification message 751 may be sent at 1001.

FIG. 15 is a flowchart of a method according to various embodiments. E.g., the method according to FIG. 15 can be executed by the processor 130-1 of a client 130, 131.

At 1011, the second notification message 752 is received. The second notification message 752 indicates a service quality of the bearer 150 and / or a service quality of the media stream 151.

Next, at 1012, the operation parameter of the media stream 151 is set based on the indicated service quality. E.g., at 1012, a media type and/or a bit rate of the media data provided by the media stream 151 may be set.

In some scenarios, 1012 may be executed while the media stream 151 is active, i.e., while media data is being streamed; while in further scenarios, 1012 may be executed for the media stream 151 which is not streaming media data, i.e., is inactive. This scenario may occur where the media stream 151 has not been set up yet.

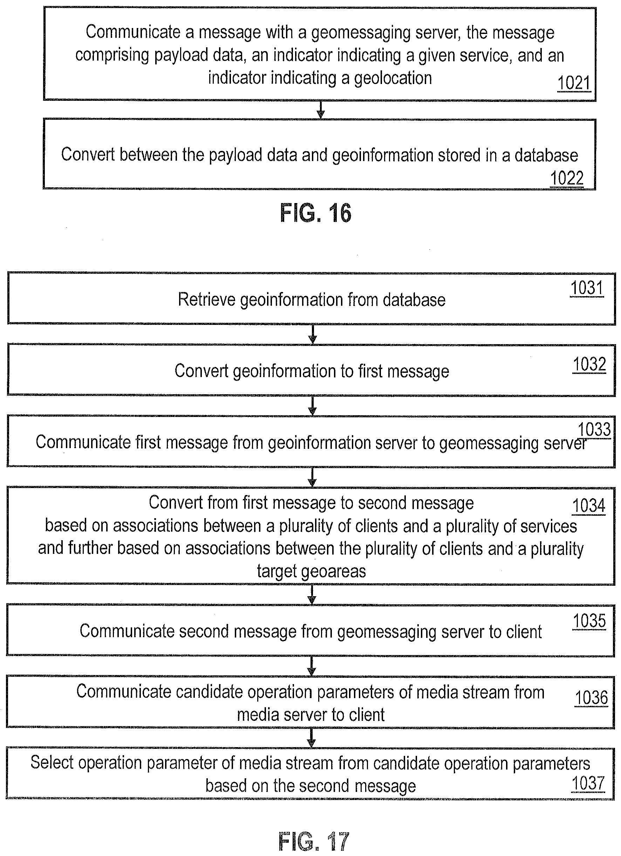

FIG. 16 is a flowchart of a method according to various embodiments. E.g., the method according to FIG. 16 can be executed by the processor 601-1 of the geoinformation server 601. At 1021, a first notification message 751 is communicated with the geomessaging server 602. The first notification message 751 comprises payload data, the indicator indicating the given service associated with the payload data, and the indicator indicating the geolocation 224 associated with the payload data. The payload data is indicative of certain geoinformation.

E.g., at 1021, the first notification message 751 may be sent to the geomessaging server 602 and/or received from the geomessaging server 602.

At 1022, conversion between the payload data of the first notification message 751 and geoinformation stored in the database 601A is executed. Depending on whether the notification message 751 is sent or received, 1022 can be executed before or after 1021.

FIG. 17 illustrates a method according to various embodiments. First, at 1031, geoinformation is retrieved from the database 601A, e.g., by the geoinformation server 601. Next, at 1032, the retrieved geoinformation is converted to obtain the first notification message 751. Next, at 1033, the first notification message 751 is communicated from the geoinformation server 601 to the geomessaging server 602. I.e., at 1033, the geoinformation server 601 sends the first notification message 751 and the geomessaging server 602 receives the first notification message 752.

At 1034, the geomessaging server 602 converts from the first notification message 751 to the second notification message 752. Said conversion is based on the associations 500 between the plurality of clients 130, 131 and the plurality of services; as well as based on the associations 500 between the plurality of clients 130, 131 and the plurality of geoareas 222, 223. In particular, by converting at 1034, the client-unspecific first notification message 751 can be translated in one or more client-specific second notification messages 752.

Next, at 1035, the second notification message 752 is communicated from the geomessaging server 602 to the client 130, 131. Hence, as part of 1035, the second notification message 752 is sent by the geomessaging server 602 and received by the client 130, 131.

At 1036, candidate operation parameters of the media stream 151 between the media server 651 and the client 130, 131 are communicated; e.g., a respective stream control message 901, 905 may be received by the client 130, 131 from the media server 651. Then, at 1037, the client 130, 137 sets the operation parameter of the media stream 151 by selecting the operation parameter to be implemented from the candidate operation parameters indicated by the stream control message; this is based on the geoinformation indicated by the second notification message 752 received earlier.

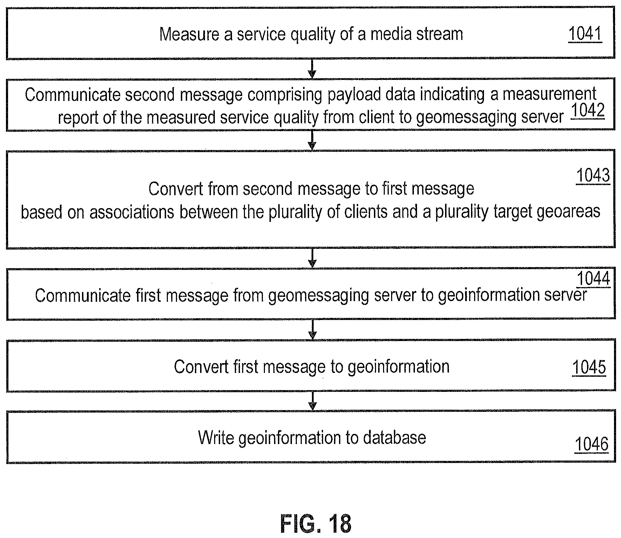

FIG. 18 illustrates a method according to various embodiments. First, at 1041, the service quality of the media stream 151 is measured. At 1042, a respective second notification message 752 comprising payload data which indicates the measurement report of the measured service quality of the media stream 151 and location information is communicated from the client 130, 131 to the geomessaging server 602. I.e., as part of 1042, the client 130, 131 may send the second notification message 752 and the geomessaging server 602 may receive the second notification message 752.

At 1043, the second notification message 752 is converted to the first notification message 751 based on the associations 500 between the plurality of clients 130, 131 and the plurality of geoareas 222, 223 associated with the clients 130, 131. E.g., as part of 1043, a respective geolocation 224 may be determined and included in the first notification message 751. E.g., this may be the geolocation 224 where the client 130, 131 was moving while taking a corresponding measurement. In other scenarios, the geoarea 222, 223 associated with the second notification message 752 may explicitly indicate the geolocation 224; then no determination may be required.

Next, at 1044, the first notification message 751 is communicated from the geomessaging server 602 to the geoinformation server 601. I.e., as part of 1044, the geomessaging server 602 may send the first notification message 751 and the geoinformation server 601 may receive the first notification message 751. Then, the geoinformation server 601 converts the first notification message 751 to geoinformation, 1045, and writes the geoinformation to the database 601A. By this, the database 601A can be updated and populated in order to increase an accuracy of the geoinformation.

While the various techniques discussed above with respect to FIGs. 17 and 18 have been disclosed in the context of the service quality of the media stream 151, similar techniques may be readily applied to different kinds and types of services, geoinformation, and / or measurement reports. E.g., it is possible that at 1041 an observable relating to roadside situation, e.g., a velocity, a congestion level, etc. is measured and that the notification message 752 comprises a respective measurement report.

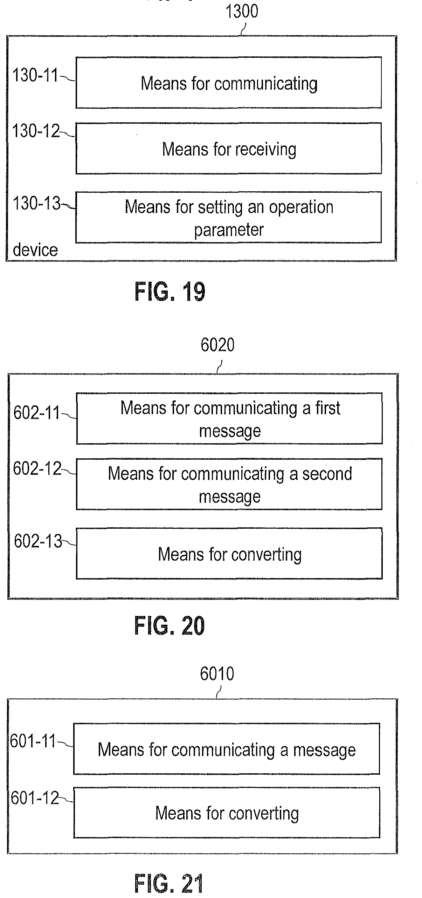

Referring to FIG. 19: According to various embodiments, a device is provided 1300. The device 1300 comprises means 130-11 for communicating with the wireless network via a radio link. The device further comprises means 130-12 for receiving, from a geomessaging server attached to the wireless network, a message. The message comprises payload data. The payload data indicates a service quality of at least one of a bearer through at least parts of the wireless network and media stream through the wireless network. The device further comprises means 130-13 for setting an operation parameter of the media stream based on the indicated service quality.

Referring to FIG. 20: According to various embodiments, a device 6020 is provided. The device 6020 comprises means 602-11 for communicating a first message between a geomessaging server and a geoinformation server. The first message comprises first payload data. The first message further comprises an indicator indicating a given service associated with the first payload data. The first message further comprises an indicator indicating a geolocation associated with the first payload data. The device 6020 further comprises means 602-12 for communicating a second message between the geomessaging server and a given client. The given client is attached to a wireless network and is associated with the given service. The second message comprises second payload data. The second payload data corresponds to the first payload data. The device 6020 further comprises means 602-13 for converting between the first message and the second message.

Referring to FIG. 21: According various embodiments, a device 6010 is provided. The device 6010 comprises means 601-11 for communicating a message between a geoinformation server and a geomessaging server. The message comprises payload data. The message further comprises an indicator indicating a given service associated with the payload data. The message further comprises an indicator indicating a geolocation associated with the payload data. The device 6010 further comprises means 601-12 for converting between the payload data and geoinformation stored in a database.

Summarizing, above techniques have been illustrated which enable lean and efficient distribution of geoinformation. In particular, an architecture has been disclosed which enables to implement the geoinformation server which provides client-unspecific notification messages; distribution of the geoinformation is medicated by a geomessaging system which acts as a transport layer for the client-unspecific notification messages.

According to some examples, the geoinformation may relate to a service quality of a bearer and/or a service quality of a media stream. Such information may be used in order to set an operation parameter of the media stream. E.g., a media server providing the media stream may be capable of sending a number of variants for the same media stream, e.g., different qualities of media data. Likewise, the client may be capable of receiving and playing back the different variants of the same media stream. By combining the geoinformation server with the geomessaging system, it becomes possible to distribute the service quality required to accurately set such operation parameters as the media type of the media stream in a lean and efficient manner.

Although the invention has been shown and described with respect to certain preferred embodiments, equivalents and modifications will occur to others skilled in the art upon the reading and understanding of the specification. The present invention comprises all such equivalents and modifications and is limited only by the scope of the appended claims.

E.g., while above various scenarios have been discussed with respect to the specific service regarding a media stream, various modifications are conceivable such that the respective techniques are applicable to different services. E.g., respective techniques may be applied to a service relating to roadside information, weather forecast, etc.

E.g., while above various scenarios have been discussed with respect to the geomessaging client and geoinformation client and media client as functional entities implemented by the clients, it should be understood that generally a different distribution of functions can be implemented by the clients. E.g., a single functional entity may perform the various tasks with respect to geomessaging and geoinformation handling and service handling, such as media stream playback.

## Claims

1. A geomessaging server (602), comprising a memory (602-3) and at least one processor (602-1), said memory (602-3) containing instructions executable by said at least one processor (602-1),wherein the geomessaging server (602) provided in a packet data network (140, 145) attached to a wireless network (113), whereby a given client (130,131) attached to the wireless network is associated with a given service via communicating on a bearer (150), wherein the given service includes a media stream or roadside information and/or any other geolocation-dependent service,
wherein the geomessaging server (602) is operative to:
- receive a first message (751) from a geoinformation server (601), the first message (751) comprising first payload data (221, 221a) which is indicative of geoinformation, an indicator indicating the media stream (151) associated with the first payload data (221, 221a) when the service includes a media stream, and an indicator indicating a geolocation (222, 223, 224) associated with the first payload data (221, 221a),
wherein the geoinformation relates to observables encountered by the client dependent on the geolocation of the client and enables the client to set operation parameters for communicating via the bearer;
- send a second message (752) to the given client (130, 131) attached to the wireless network (113) and associated with the given service (151), the second message (752) comprising second payload data (221, 221a), the second payload data (221, 221a) corresponding to the first payload data (221, 221a) carries a same or comparable information, and/or derived from the first payload data (221, 221a), wherein the first payload data (221, 221a) and the second payload data (221, 221a) indicate one or more of
- a service quality (155, 156) of the bearer (150) through at least parts of the wireless network (113),and
- a service quality (157, 157A) of the media stream (151) through the wireless network (113) when the service includes a media stream;
- convert between the first message (751) and the second message (752)
wherein the first message (751) further comprises an indicator indicating a temporal validity (225) associated with the first payload data (221, 221a), wherein the temporal validity specifies an estimated point in time or time period during which the geoinformation underlying the first payload data (221) is expected to be valid and accurate;
wherein the geomessaging server (602) is further operative to:
- convert from the first message (751) to the second message (752) based on the indicator indicating the temporal validity (225) associated with the first payload data (221, 221a),by delaying sending of the second message (752) until a point in time which is indicated as valid, based on the indicator indicating the temporal validity (225) associated with the first payload data (221, 221a), wherein the geomessaging server is further operative to:
- maintain associations between clients and geoareas corresponding to geolocations of the clients;
- send the second message as a geomessage only to clients located in the geoarea corresponding to the geolocation of the given client and subscribed to the given service.

2. The geomessaging server (602) of claim 1,
wherein the geomessaging server (602) is operative to:
- store associations (500) between a plurality of clients (130, 131) attached to the wireless network (113) and a plurality of services (151), the plurality of clients (130, 131) comprising the given client (130, 131), the plurality of services (151) comprising the given service (151),
- convert between the first message (751) and the second message (752) based on the associations (500) between the plurality of clients (130, 131) and the plurality of services (151).

3. The geomessaging server (602) of any one of the preceding claims,
wherein the geomessaging server (602) is operative to:
- store associations (500) between a plurality of clients (130, 131) attached to the wireless network (113) and a plurality of geoareas (222, 223), the plurality of clients (130, 131) comprising the given client (130, 131), a coverage area of the wireless network (113) comprising the plurality of geoareas (222, 223),
- convert between the first message (751) and the second message (752) based on a given geoarea (222, 223) of the plurality of geoareas (222, 223) associated with the given client (130, 131) and further based on the indicator indicating the geolocation (222, 223, 224) associated with the first payload data (221, 221a).

4. The geomessaging server (602) of any one of the preceding claims,
wherein the geomessaging server (602) is operative to:
- receive the first message (751) from the geoinformation server (601),
- send the second message (752) to the given client (130, 131),
- convert from the first message (751) to the second message (752) by comprising, in the second message (752), a geoaddress corresponding to a given geoarea (222, 223) associated with the given client (130, 131).

5. The geomessaging server (602) of any of the preceding claims,
wherein the geomessaging server (602) is operative to:
- convert from the first message (751) to the second message (752) by comprising, in the second message (752), the indicator indicating the temporal validity (225) associated with the first payload data (221, 221a).

6. A geoinformation server (601), comprising a memory (601-3) and at least one processor (601-1), said memory (601-3) containing instructions executable by said at least one processor (601-1), wherein the geomessaging server (601) is provided in a packet data network (140, 145) attached to a wireless network (113), whereby a given client (130,131) attached to the wireless network is associated with a given service via communicating on a bearer (150), wherein the given service includes a media stream or roadside information and/or any other geolocation-dependent service,
wherein the geoinformation server (601) is operative to:
- send a first message (751) to a geomessaging server (602), the first message (751) comprising payload data (221, 221a) which is indicative of geoinformation, an indicator indicating the media stream associated with the payload data (221, 221a) when the service includes a media stream, and an indicator indicating a geolocation associated with the payload data (221, 221a),
- convert the payload data (221, 221a) to the geoinformation, when the payload data is received from the geoinformation server (602); and update and/or populate the geoinformation stored in a database,
- determine a temporal validity (225) associated with the payload data (221, 221a),
wherein the first message (751) further comprises an indicator indicating the temporal validity (225) associated with the payload data (221, 221a); wherein the temporal validity specifies an estimated point in time or time period during which geoinformation underlying the payload data (221,221a) is expected to be valid and accurate, and wherein the payload data (221, 221a) indicates one or more of:
- a service quality (155, 156) of the bearer (150) through at least parts of a wireless network (113), and
- a service quality (157, 157A) of the media stream (151) through a wireless network (113) when the service includes a media stream.

7. The geoinformation server (601) of claim 6,
wherein the geoinformation server (601) is operative to:
- send, to the geomessaging server (602), a control message (705) comprising the indicator indicating the given service (151).

8. The geoinformation server (601) of any one of claims 6-7,
wherein the payload data (221, 221a) further indicates one or more of
- the roadside situation (158, 159),
- a measurement report of the given client (130, 131) attached to a wireless network (113).

9. The geoinformation server (601) of any one of claims 6-8,
wherein the geoinformation server (601) is operative to:
- send a plurality of messages (751) to the geomessaging server (602) as a feed.

10. A method performed by a geomessaging server (602) provided in a packet data network (140, 145) attached to a wireless network (113), whereby a given client (130,131) attached to the wireless network is associated with a given service via communicating on a bearer (150), wherein the given service includes a media stream or roadside information and/or any other geolocation-dependent service, wherein the method comprising:
- receiving a first message (751) by the geomessaging server (602) from a geoinformation server (601), the first message (751) comprising first payload data (221, 221a) which is indicative of geoinformation, an indicator indicating the media stream associated with the first payload data (221, 221a) when the service includes a media stream, and an indicator indicating a geolocation (222, 223, 224) associated with the first payload data (221, 221a), wherein the geoinformation relates to observables encountered by the client dependent on the geolocation of the client and enables the client to set operation parameters for communicating via the bearer;
- sending a second message (752) from the geomessaging server (602) to the given client (130, 131) attached to the wireless network (113) and associated with the given service (151), the second message (752) comprising second payload data (221, 221a), the second payload data (221, 221a) corresponding to the first payload data (221, 221a) carries a same or comparable information, and/or derived from the first payload data (221, 221a), wherein the first payload data (221, 221a) and the second payload data (221, 221a) indicate one or more of
- a service quality (155, 156) of the bearer (150) through at least parts of the wireless network (113),and
- a service quality (157, 157A) of the media stream (151) through the wireless network (113) when the service includes a media stream;
- converting between the first message (751) and the second message (752)
wherein the first message (751) further comprises an indicator indicating a temporal validity (225) associated with the first payload data (221, 221a), wherein the temporal validity specifies an estimated point in time or time period during which the geoinformation underlying the first payload data (221) is expected to be valid and accurate;
wherein said converting between the first message (751) and the second message (752) comprises converting from the first message (751) to the second message (752) based on the indicator indicating the temporal validity (225) associated with the first payload data (221, 221a),
- by delaying sending of the second message (752) until a point in time which is indicated as valid, based on the indicator indicating the temporal validity (225) associated with the first payload data (221, 221a) wherein the geomessaging server is further operative to:
- maintain associations between clients and geoareas corresponding to geolocations of the clients;
- send the second message as a geomessage only to clients located in the geoarea corresponding to the geolocation of the given client and subscribed to the given service.

11. The method of claim 10,
wherein said converting from the first message (751) to the second message (752) comprises comprising, in the second message (752), the indicator indicating the temporal validity (225) associated with the first payload data (221, 221a).

12. A method performed by a geoinformation server (601) provided in a packet data network (140, 145) attached to a wireless network (113), whereby a given client (130,131) attached to the wireless network is associated with a given service via communicating on a bearer (150), wherein the given service includes a media stream or roadside information and/or any other geolocation-dependent service, wherein the method comprising:
- sending a first message to a geomessaging server (602), the first message comprising payload data (221, 221a) which is indicative of geoinformation, an indicator indicating the media stream associated with the payload data (221, 221a) when the service includes a media stream, and an indicator indicating a geolocation (222, 223, 224) associated with the payload data (221, 221a),
- converting from payload data (221, 221a) to the geoinformation when the payload data is received from the geoinformation server (602); and update and/or populate the geoinformation stored in a database,
wherein the method further comprises:
- determining a temporal validity (225) associated with the payload data (221, 221a),
wherein the first message further comprises an indicator indicating the temporal validity (225) associated with the payload data (221, 221a); wherein the temporal validity specifies an estimated point in time or time period during which geoinformation underlying the first payload data (221) is expected to be valid and accurate, and wherein the payload data (221, 221a) indicates one or more of
- a service quality (155, 156) of the bearer (150) through at least parts of a wireless network (113), and
- a service quality (157, 157A) of the media stream (151) through a wireless network (113) .

13. A computer readable storage medium, having stored thereon a computer program, wherein execution of the computer program by at least one processor causes the at least one processor to execute a method as mentioned in any of claims 10 to 12.

## Patentansprüche

1. Geomessaging-Server (602), der einen Speicher (602-3) und mindestens einen Prozessor (602-1) umfasst, wobei der Speicher (602-3) Anweisungen enthält, die durch den mindestens einen Prozessor (602-1) ausführbar sind, wobei der Geomessaging-Server (602) in einem Paketdatennetzwerk (140, 145), das mit einem drahtlosen Netzwerk (113) verbunden ist, bereitgestellt ist, wodurch ein jeweiliger Client (130, 131), der mit dem drahtlosen Netzwerk verbunden ist, einem jeweiligen Dienst über Kommunizieren auf einem Träger (150) zugeordnet ist, wobei der jeweilige Dienst einen Medienstrom oder straßenseitige Informationen und/oder einen beliebigen anderen geolokalisierungsabhängigen Dienst beinhaltet,
wobei der Geomessaging-Server (602) zu Folgendem betreibbar ist:
- Empfangen einer ersten Nachricht (751) von einem Geoinformationsserver (601), wobei die erste Nachricht (751) erste Nutzdaten (221, 221a), die Geoinformationen angeben, einen Indikator, der den Medienstrom (151) angibt, der den ersten Nutzdaten (221, 221a) zugeordnet ist, wenn der Dienst einen Medienstrom beinhaltet, und einen Indikator, der eine Geolokalisierung (222, 223, 224) angibt, die den ersten Nutzdaten (221, 221a) zugeordnet ist, umfasst,
wobei sich die Geoinformationen auf Observable beziehen, denen der Client in Abhängigkeit von der Geolokalisierung des Clients begegnet ist, und es dem Client ermöglichen, Betriebsparameter zum Kommunizieren über den Träger einzustellen;
- Senden einer zweiten Nachricht (752) an den jeweiligen Client (130, 131), der mit dem drahtlosen Netzwerk (113) verbunden und dem jeweiligen Dienst (151) zugeordnet ist, wobei die zweite Nachricht (752) zweite Nutzdaten (221, 221a) umfasst, wobei die zweiten Nutzdaten (221, 221a) den ersten Nutzdaten (221, 221a) entsprechen, gleiche oder vergleichbare Informationen tragen und/oder von den ersten Nutzdaten (221, 221a) abgeleitet sind, wobei die ersten Nutzdaten (221, 221a) und die zweiten Nutzdaten (221, 221a) eines oder mehrere von Folgendem angeben:
- eine Dienstgüte (155, 156) des Trägers (150) durch mindestens Teile des drahtlosen Netzwerks (113) und
- eine Dienstgüte (157, 157A) des Medienstroms (151) durch das drahtlose Netzwerk (113), wenn der Dienst einen Medienstrom beinhaltet;
- Umwandeln zwischen der ersten Nachricht (751) und der zweiten Nachricht (752),
wobei die erste Nachricht (751) ferner einen Indikator, der eine zeitliche Gültigkeit (225) angibt, die den ersten Nutzdaten (221, 221a) zugeordnet ist, umfasst, wobei die zeitliche Gültigkeit einen geschätzten Zeitpunkt oder Zeitraum vorgibt, während dessen erwartet wird, dass die Geoinformationen, die den ersten Nutzdaten (221) zugrunde liegen, gültig und genau sind;
wobei der Geomessaging-Server (602) ferner zu Folgendem betreibbar ist:
- Umwandeln von der ersten Nachricht (751) in die zweite Nachricht (752) basierend auf dem Indikator, der die zeitliche Gültigkeit (225) angibt, die den ersten Nutzdaten (221, 221a) zugeordnet ist, durch Verzögern des Sendens der zweiten Nachricht (752) bis zu einem Zeitpunkt, der als gültig angegeben ist, basierend auf dem Indikator, der die zeitliche Gültigkeit (225) angibt, die den ersten Nutzdaten (221, 221a) zugeordnet ist, wobei der Geomessaging-Server ferner zu Folgendem betreibbar ist:
- Aufrechterhalten von Zuordnungen zwischen Clients und Geobereichen, die Geolokalisierungen der Clients entsprechen;
- Senden der zweiten Nachricht als eine Geomessage nur an Clients, die sich in dem Geobereich befinden, welcher der Geolokalisierung des jeweiligen Clients entspricht und den jeweiligen Dienst abonniert hat.

2. Geomessaging-Server (602) nach Anspruch 1,
wobei der Geomessaging-Server (602) zu Folgendem betreibbar ist:
- Speichern von Zuordnungen (500) zwischen einer Vielzahl von Clients (130, 131), die mit dem drahtlosen Netzwerk (113) verbunden sind, und einer Vielzahl von Diensten (151), wobei die Vielzahl von Clients (130, 131) den jeweiligen Client (130, 131) umfasst, wobei die Vielzahl von Diensten (151) den jeweiligen Dienst (151) umfasst,
- Umwandeln zwischen der ersten Nachricht (751) und der zweiten Nachricht (752) basierend auf den Zuordnungen (500) zwischen der Vielzahl von Clients (130, 131) und der Vielzahl von Diensten (151).

3. Geomessaging-Server (602) nach einem der vorhergehenden Ansprüche,
wobei der Geomessaging-Server (602) zu Folgendem betreibbar ist:
- Speichern von Zuordnungen (500) zwischen einer Vielzahl von Clients (130, 131), die mit dem drahtlosen Netzwerk (113) verbunden sind, und einer Vielzahl von Geobereichen (222, 223), wobei die Vielzahl von Clients (130, 131) den jeweiligen Client (130, 131) umfasst, wobei ein Abdeckungsbereich des drahtlosen Netzwerks (113) die Vielzahl von Geobereichen (222, 223) umfasst,
- Umwandeln zwischen der ersten Nachricht (751) und der zweiten Nachricht (752) basierend auf einem jeweiligen Geobereich (222, 223) der Vielzahl von Geobereichen (222, 223), die dem jeweiligen Client (130, 131) zugeordnet sind, und ferner basierend auf dem Indikator, der die Geolokalisierung (222, 223, 224) angibt, die den ersten Nutzdaten (221, 221a) zugeordnet ist.

4. Geomessaging-Server (602) nach einem der vorhergehenden Ansprüche,
wobei der Geomessaging-Server (602) zu Folgendem betreibbar ist:
- Empfangen der ersten Nachricht (751) von dem Geoinformationsserver (601),
- Senden der zweiten Nachricht (752) an den jeweiligen Client (130, 131),
- Umwandeln von der ersten Nachricht (751) in die zweite Nachricht (752) durch Umfassen, in der zweiten Nachricht (752), einer Geoadresse, die einem jeweiligen Geobereich (222, 223) entspricht, der dem jeweiligen Client (130, 131) zugeordnet ist.

5. Geomessaging-Server (602) nach einem der vorhergehenden Ansprüche,
wobei der Geomessaging-Server (602) zu Folgendem betreibbar ist:
- Umwandeln von der ersten Nachricht (751) in die zweite Nachricht (752) durch Umfassen, in der zweiten Nachricht (752), des Indikators, der die zeitliche Gültigkeit (225) angibt, die den ersten Nutzdaten (221, 221a) zugeordnet ist.

6. Geoinformationsserver (601), der einen Speicher (601-3) und mindestens einen Prozessor (601-1) umfasst, wobei der Speicher (601-3) Anweisungen enthält, die durch den mindestens einen Prozessor (601-1) ausführbar sind, wobei der Geomessaging-Server (601) in einem Paketdatennetzwerk (140, 145), das mit einem drahtlosen Netzwerk (113) verbunden ist, bereitgestellt ist, wodurch ein jeweiliger Client (130, 131), der mit dem drahtlosen Netzwerk verbunden ist, einem jeweiligen Dienst über Kommunizieren auf einem Träger (150) zugeordnet ist, wobei der jeweilige Dienst einen Medienstrom oder straßenseitige Informationen und/oder einen beliebigen anderen geolokalisierungsabhängigen Dienst beinhaltet,
wobei der Geoinformationsserver (601) zu Folgendem betreibbar ist:
- Senden einer ersten Nachricht (751) an einen Geomessaging-Server (602), wobei die erste Nachricht (751) Nutzdaten (221, 221a), die Geoinformationen angeben, einen Indikator, der den Medienstrom angibt, der den Nutzdaten (221, 221a) zugeordnet ist, wenn der Dienst einen Medienstrom beinhaltet, und einen Indikator, der eine Geolokalisierung angibt, die den Nutzdaten (221, 221a) zugeordnet ist, umfasst,
- Umwandeln der Nutzdaten (221, 221a) in die Geoinformationen, wenn die Nutzdaten von dem Geoinformationsserver (602) empfangen werden; und Aktualisieren und/oder Einpflegen der Geoinformationen, die in einer Datenbank gespeichert sind,
- Bestimmen einer zeitlichen Gültigkeit (225), die den Nutzdaten (221, 221a) zugeordnet ist,
wobei die erste Nachricht (751) ferner einen Indikator, der die zeitliche Gültigkeit (225) angibt, die den Nutzdaten (221, 221a) zugeordnet ist, umfasst; wobei die zeitliche Gültigkeit einen geschätzten Zeitpunkt oder Zeitraum vorgibt, während dessen erwartet wird, dass Geoinformationen, die den Nutzdaten (221, 221a) zugrunde liegen, gültig oder genau sind, und wobei die Nutzdaten (221, 221a) eines oder mehrere von Folgendem angeben:
- eine Dienstgüte (155, 156) des Trägers (150) durch mindestens Teile eines drahtlosen Netzwerks (113) und
- eine Dienstgüte (157, 157A) des Medienstroms (151) durch ein drahtloses Netzwerk (113), wenn der Dienst einen Medienstrom beinhaltet.

7. Geoinformationsserver (601) nach Anspruch 6,
wobei der Geoinformationsserver (601) zu Folgendem betreibbar ist:
- Senden, an den Geomessaging-Server (602), einer Steuernachricht (705), die den Indikator umfasst, der den jeweiligen Dienst (151) angibt.

8. Geoinformationsserver (601) nach einem der Ansprüche 6-7,
wobei die Nutzdaten (221, 221a) ferner eines oder mehrere von Folgendem angeben:
- die straßenseitige Situation (158, 159),
- einen Messbericht des jeweiligen Clients (130, 131), der mit einem drahtlosen Netzwerk (113) verbunden ist.

9. Geoinformationsserver (601) nach einem der Ansprüche 6-8,
wobei der Geoinformationsserver (601) zu Folgendem betreibbar ist:
- Senden einer Vielzahl von Nachrichten (751) an den Geomessaging-Server (602) als ein Feed.

10. Verfahren, das durch einen Geomessaging-Server (602) durchgeführt wird, der in einem Paketdatennetzwerk (140, 145), das mit einem drahtlosen Netzwerk (113) verbunden ist, bereitgestellt ist, wodurch ein jeweiliger Client (130, 131), der mit dem drahtlosen Netzwerk verbunden ist, einem jeweiligen Dienst über Kommunizieren auf einem Träger (150) zugeordnet ist, wobei der jeweilige Dienst einen Medienstrom oder straßenseitige Informationen und/oder einen beliebigen anderen geolokalisierungsabhängigen Dienst beinhaltet, wobei das Verfahren Folgendes umfasst:
- Empfangen einer ersten Nachricht (751) durch den Geomessaging-Server (602) von einem Geoinformationsserver (601), wobei die erste Nachricht (751) erste Nutzdaten (221, 221a), die Geoinformationen angeben, einen Indikator, der den Medienstrom angibt, der den ersten Nutzdaten (221, 221a) zugeordnet ist, wenn der Dienst einen Medienstrom beinhaltet, und einen Indikator, der eine Geolokalisierung (222, 223, 224) angibt, die den ersten Nutzdaten (221, 221a) zugeordnet ist, umfasst, wobei sich die Geoinformationen auf Observable beziehen, denen der Client in Abhängigkeit von der Geolokalisierung des Clients begegnet ist, und es dem Client ermöglichen, Betriebsparameter zum Kommunizieren über den Träger einzustellen;
- Senden einer zweiten Nachricht (752) von dem Geomessaging-Server (602) an den jeweiligen Client (130, 131), der mit dem drahtlosen Netzwerk (113) verbunden und dem jeweiligen Dienst (151) zugeordnet ist, wobei die zweite Nachricht (752) zweite Nutzdaten (221, 221a) umfasst, wobei die zweiten Nutzdaten (221, 221a) den ersten Nutzdaten (221, 221a) entsprechen, gleiche oder vergleichbare Informationen tragen und/oder von den ersten Nutzdaten (221, 221a) abgeleitet sind, wobei die ersten Nutzdaten (221, 221a) und die zweiten Nutzdaten (221, 221a) eines oder mehrere von Folgendem angeben:
- eine Dienstgüte (155, 156) des Trägers (150) durch mindestens Teile des drahtlosen Netzwerks (113) und
- eine Dienstgüte (157, 157A) des Medienstroms (151) durch das drahtlose Netzwerk (113), wenn der Dienst einen Medienstrom beinhaltet;
- Umwandeln zwischen der ersten Nachricht (751) und der zweiten Nachricht (752),
wobei die erste Nachricht (751) ferner einen Indikator umfasst, der eine zeitliche Gültigkeit (225), die den ersten Nutzdaten (221, 221a) zugeordnet ist, angibt, wobei die zeitliche Gültigkeit einen geschätzten Zeitpunkt oder Zeitraum vorgibt, während dessen erwartet wird, dass die Geoinformationen, die den ersten Nutzdaten (221) zugrunde liegen, gültig und genau sind;
wobei das Umwandeln zwischen der ersten Nachricht (751) und der zweiten Nachricht (752) Umwandeln von der ersten Nachricht (751) in die zweite Nachricht (752) basierend auf dem Indikator, der die zeitliche Gültigkeit (225) angibt, die den ersten Nutzdaten (221, 221a) zugeordnet ist, umfasst,
- durch Verzögern des Sendens der zweiten Nachricht (752) bis zu einem Zeitpunkt, der als gültig angegeben ist, basierend auf dem Indikator, der die zeitliche Gültigkeit (225) angibt, die den ersten Nutzdaten (221, 221a) zugeordnet ist, wobei der Geomessaging-Server ferner zu Folgendem betreibbar ist:
- Aufrechterhalten von Zuordnungen zwischen Clients und Geobereichen, die Geolokalisierungen der Clients entsprechen;
- Senden der zweiten Nachricht als eine Geomessage nur an Clients, die sich in dem Geobereich befinden, welcher der Geolokalisierung des jeweiligen Clients entspricht und den jeweiligen Dienst abonniert hat.

11. Verfahren nach Anspruch 10,
wobei das Umwandeln von der ersten Nachricht (751) in die zweite Nachricht (752) Umfassen, in der zweiten Nachricht (752), des Indikators, der die zeitliche Gültigkeit (225) angibt, die den ersten Nutzdaten (221, 221a) zugeordnet ist, umfasst.

12. Verfahren, das durch einen Geoinformationsserver (601) durchgeführt wird, der in einem Paketdatennetzwerk (140, 145), das mit einem drahtlosen Netzwerk (113) verbunden ist, bereitgestellt ist, wodurch ein jeweiliger Client (130, 131), der mit dem drahtlosen Netzwerk verbunden ist, einem jeweiligen Dienst über Kommunizieren auf einem Träger (150) zugeordnet ist, wobei der jeweilige Dienst einen Medienstrom oder straßenseitige Informationen und/oder einen beliebigen anderen geolokalisierungsabhängigen Dienst beinhaltet, wobei das Verfahren Folgendes umfasst:
- Senden einer ersten Nachricht an einen Geomessaging-Server (602), wobei die erste Nachricht Nutzdaten (221, 221a), die Geoinformationen angeben, einen Indikator, der den Medienstrom angibt, der den Nutzdaten (221, 221a) zugeordnet ist, wenn der Dienst einen Medienstrom beinhaltet, und einen Indikator, der eine Geolokalisierung (222, 223, 224) angibt, die den Nutzdaten (221, 221a) zugeordnet ist, umfasst,
- Umwandeln von Nutzdaten (221, 221a) in die Geoinformationen, wenn die Nutzdaten von dem Geoinformationsserver (602) empfangen werden; und Aktualisieren und/oder Einpflegen der Geoinformationen, die in einer Datenbank gespeichert sind,
wobei das Verfahren ferner Folgendes umfasst:
- Bestimmen einer zeitlichen Gültigkeit (225), die den Nutzdaten (221, 221a) zugeordnet ist,
wobei die erste Nachricht ferner einen Indikator, der die zeitliche Gültigkeit (225) angibt, die den Nutzdaten (221, 221a) zugeordnet ist, umfasst; wobei die zeitliche Gültigkeit einen geschätzten Zeitpunkt oder Zeitraum vorgibt, während dessen erwartet wird, dass Geoinformationen, die den ersten Nutzdaten (221) zugrunde liegen, gültig und genau sind, und wobei die Nutzdaten (221, 221a) eines oder mehrere von Folgendem angeben:
- eine Dienstgüte (155, 156) des Trägers (150) durch mindestens Teile eines drahtlosen Netzwerks (113) und
- eine Dienstgüte (157, 157A) des Medienstroms (151) durch ein drahtloses Netzwerk (113).

13. Computerlesbares Speichermedium mit einem darauf gespeicherten Computerprogramm, wobei eine Ausführung des Computerprogramms durch mindestens einen Prozessor den mindestens einen Prozessor veranlasst, ein Verfahren nach einem der Ansprüche 10 bis 12 auszuführen.

## Revendications

1. Serveur de géomessagerie (602), comprenant une mémoire (602-3) et au moins un processeur (602-1), ladite mémoire (602-3) contenant des instructions exécutables par ledit au moins un processeur (602-1), dans lequel le serveur de géomessagerie (602) prévu dans un réseau de données par paquets (140, 145) connecté à un réseau sans fil (113), moyennant quoi un client donné (130, 131) connecté au réseau sans fil est associé à un service donné via une communication sur un support (150), dans lequel le service donné comporte un flux multimédia ou des informations routières et/ou tout autre service dépendant de la géolocalisation,
dans lequel le serveur de géomessagerie (602) permet de:
- recevoir un premier message (751) d'un serveur d'informations géographiques (601), le premier message (751) comprenant des premières données de charge utile (221, 221a) qui sont indicatives d'informations géographiques, un indicateur indiquant le flux multimédia (151) associé aux premières données de charge utile (221, 221a) lorsque le service comporte un flux multimédia, et un indicateur indiquant une géolocalisation (222, 223, 224) associée aux premières données de charge utile (221, 221a),
dans lequel les informations géographiques se rapportent à des observables rencontrés par le client en fonction de la géolocalisation du client et permettent au client de définir des paramètres de fonctionnement pour communiquer via le support ;
- envoyer un second message (752) au client donné (130, 131) connecté au réseau sans fil (113) et associé au service donné (151), le second message (752) comprenant des secondes données de charge utile (221, 221a), les secondes données de charge utile (221, 221a) correspondant aux premières données de charge utile (221, 221a) transportent des informations identiques ou comparables, et/ou dérivées des premières données de charge utile (221, 221a), dans lequel les premières données de charge utile (221, 221a) et les secondes données de charge utile (221,221a) indiquent une ou plusieurs parmi
- une qualité de service (155, 156) du support (150) à travers au moins des parties du réseau sans fil (113), et
- une qualité de service (157, 157A) du flux multimédia (151) à travers le réseau sans fil (113) lorsque le service comporte un flux multimédia ;
- convertir entre le premier message (751) et le second message (752)
dans lequel le premier message (751) comprend en outre un indicateur indiquant une validité temporelle (225) associée aux premières données de charge utile (221, 221a), dans lequel la validité temporelle spécifie un moment estimé ou une période de temps pendant laquelle les informations géographiques sous-jacentes aux premières données de charge utile (221) devraient être valides et exactes ;
dans lequel le serveur de géomessagerie (602) permet en outre de :
- convertir du premier message (751) au second message (752) sur la base de l'indicateur indiquant la validité temporelle (225) associée aux premières données de charge utile (221, 221a), en retardant l'envoi du second message (752) jusqu'à un moment qui est indiqué comme valide, sur la base de l'indicateur indiquant la validité temporelle (225) associée aux premières données de charge utile (221, 221a), dans lequel le serveur de géomessagerie permet en outre de :
- maintenir des associations entre clients et zones géographiques correspondant aux géolocalisations des clients ;
- envoyer le second message sous forme de géomessage uniquement aux clients situés dans la zone géographique correspondant à la géolocalisation du client donné et abonnés au service donné.

2. Serveur de géomessagerie (602) selon la revendication 1,
dans lequel le serveur de géomessagerie (602) permet de:
- stocker des associations (500) entre une pluralité de clients (130, 131) connectés au réseau sans fil (113) et une pluralité de services (151), la pluralité de clients (130, 131) comprenant le client donné (130, 131), la pluralité de services (151) comprenant le service donné (151),
- convertir entre le premier message (751) et le second message (752) sur la base des associations (500) entre la pluralité de clients (130, 131) et la pluralité de services (151).

3. Serveur de géomessagerie (602) selon l'une quelconque des revendications précédentes,
dans lequel le serveur de géomessagerie (602) permet de :
- stocker des associations (500) entre une pluralité de clients (130, 131) connectés au réseau sans fil (113) et une pluralité de zones géographiques (222, 223), la pluralité de clients (130, 131) comprenant le client donné (130, 131), une zone de couverture du réseau sans fil (113) comprenant la pluralité de zones géographiques (222, 223),
- convertir entre le premier message (751) et le second message (752) sur la base d'une zone géographique donnée (222, 223) de la pluralité de zones géographiques (222, 223) associées au client donné (130, 131) et en outre sur la base de l'indicateur indiquant la géolocalisation (222, 223, 224) associée aux premières données de charge utile (221, 221a).

4. Serveur de géomessagerie (602) selon l'une quelconque des revendications précédentes,
dans lequel le serveur de géomessagerie (602) permet de :
- recevoir le premier message (751) du serveur d'informations géographiques (601),
- envoyer le second message (752) au client donné (130, 131),
- convertir du premier message (751) au second message (752) en incluant, dans le second message (752), une adresse géographique correspondant à une zone géographique donnée (222, 223) associée au client donné (130, 131).

5. Serveur de géomessagerie (602) selon l'une quelconque des revendications précédentes,
dans lequel le serveur de géomessagerie (602) permet de :
- convertir du premier message (751) au second message (752) en incluant, dans le second message (752), l'indicateur indiquant la validité temporelle (225) associée aux premières données de charge utile (221, 221a).

6. Serveur d'informations géographiques (601), comprenant une mémoire (601-3) et au moins un processeur (601-1), ladite mémoire (601-3) contenant des instructions exécutables par ledit au moins un processeur (601-1), dans lequel le serveur de géomessagerie (601) est prévu dans un réseau de données par paquets (140, 145) connecté à un réseau sans fil (113), moyennant quoi un client donné (130, 131) connecté au réseau sans fil est associé à un service donné via une communication sur un support (150), dans lequel le service donné comporte un flux multimédia ou des informations routières et/ou tout autre service dépendant de la géolocalisation,
dans lequel le serveur d'informations géographiques (601) permet de :
- envoyer un premier message (751) à un serveur de géomessagerie (602), le premier message (751) comprenant des données de charge utile (221, 221a) qui sont indicatives d'informations géographiques, un indicateur indiquant le flux multimédia associé aux données de charge utile (221, 221a) lorsque le service comporte un flux multimédia, et un indicateur indiquant une géolocalisation associée aux données de charge utile (221,221a),
- convertir les données de charge utile (221, 221 a) en informations géographiques, lorsque les données de charge utile sont reçues du serveur d'informations géographiques (602) ; et mettre à jour et/ou d'ajouter les informations géographiques stockées dans une base de données,
- déterminer une validité temporelle (225) associée aux données de charge utile (221, 221a), dans lequel le premier message (751) comprend en outre un indicateur indiquant la validité temporelle (225) associée aux données de charge utile (221, 221a) ; dans lequel la validité temporelle spécifie un moment estimé ou une période de temps pendant laquelle les informations géographiques sous-jacentes aux données de charge utile (221, 221a) devraient être valides et exactes, et dans lequel les données de charge utile (221, 221a) indiquent une ou plusieurs parmi :
- une qualité de service (155, 156) du support (150) à travers au moins des parties du réseau sans fil (113), et
- une qualité de service (157, 157A) du flux multimédia (151) à travers un réseau sans fil (113) lorsque le service comporte un flux multimédia.

7. Serveur d'informations géographiques (601) selon la revendication 6,
dans lequel le serveur d'informations géographiques (601) permet de :
- envoyer, au serveur de géomessagerie (602), un message de commande (705) comprenant l'indicateur indiquant le service donné (151).

8. Serveur d'informations géographiques (601) selon l'une quelconque des revendications 6 à 7,
dans lequel les données de charge utile (221, 221a) indiquent en outre un ou plusieurs parmi
- la situation routière (158, 159),
- un rapport de mesure du client donné (130, 131) connecté à un réseau sans fil (113).

9. Serveur d'informations géographiques (601) selon l'une quelconque des revendications 6 à 8,
dans lequel le serveur d'informations géographiques (601) permet de :
- envoyer une pluralité de messages (751) au serveur de géomessagerie (602) sous forme de fil.

10. Procédé exécuté par un serveur de géomessagerie (602) prévu dans un réseau de données par paquets (140, 145) connecté à un réseau sans fil (113), moyennant quoi un client donné (130, 131) connecté au réseau sans fil est associé à un service donné via une communication sur un support (150), dans lequel le service donné comporte un flux multimédia ou des informations routières et/ou tout autre service dépendant de la géolocalisation, le procédé comprenant :
- la réception d'un premier message (751) par le serveur de géomessagerie (602) d'un serveur d'informations géographiques (601), le premier message (751) comprenant des premières données de charge utile (221, 221a) qui sont indicatives d'informations géographiques, un indicateur indiquant le flux multimédia associé aux premières données de charge utile (221, 221a) lorsque le service comporte un flux multimédia, et un indicateur indiquant une géolocalisation (222, 223, 224) associée aux premières données de charge utile (221, 221a), dans lequel les informations géographiques se rapportent à des observables rencontrés par le client en fonction de la géolocalisation du client et permettent au client de définir des paramètres de fonctionnement pour communiquer via le support ;
- l'envoi d'un second message (752) du serveur de géomessagerie (602) au client donné (130, 131) connecté au réseau sans fil (113) et associé au service donné (151), le second message (752) comprenant des secondes données de charge utile (221, 221a), les secondes données de charge utile (221, 221a) correspondant aux premières données de charge utile (221, 221a) transportent des informations identiques ou comparables, et/ou dérivées des premières données de charge utile (221, 221a), dans lequel les premières données de charge utile (221,221a) et les secondes données de charge utile (221,221a) indiquent une ou plusieurs parmi
- une qualité de service (155, 156) du support (150) à travers au moins des parties du réseau sans fil (113), et
- une qualité de service (157, 157A) du flux multimédia (151) à travers le réseau sans fil (113) lorsque le service comporte un flux multimédia ;
- la conversion entre le premier message (751) et le second message (752), dans lequel le premier message (751) comprend en outre un indicateur indiquant une validité temporelle (225) associée aux premières données de charge utile (221, 221a), dans lequel la validité temporelle spécifie un moment estimé ou une période de temps pendant laquelle les informations géographiques sous-jacentes aux premières données de charge utile (221) devraient être valides et exactes ;
dans lequel ladite conversion entre le premier message (751) et le second message (752) comprend la conversion du premier message (751) au second message (752) sur la base de l'indicateur indiquant la validité temporelle (225) associée aux premières données de charge utile (221,221a),
- en retardant l'envoi du second message (752) jusqu'à un moment qui est indiqué comme valide, sur la base de l'indicateur indiquant la validité temporelle (225) associée aux premières données de charge utile (221, 221a), dans lequel le serveur de géomessagerie permet en outre de :
- maintenir des associations entre clients et zones géographiques correspondant aux géolocalisations des clients ;
- envoyer le second message sous forme de géomessage uniquement aux clients situés dans la zone géographique correspondant à la géolocalisation du client donné et abonnés au service donné.

11. Procédé selon la revendication 10,
dans lequel ladite conversion du premier message (751) au second message (752) comprend le fait de comprendre, dans le second message (752), l'indicateur indiquant la validité temporelle (225) associée aux premières données de charge utile (221, 221a).

12. Procédé exécuté par un serveur d'informations géographiques (601) prévu dans un réseau de données par paquets (140, 145) connecté à un réseau sans fil (113), moyennant quoi un client donné (130, 131) connecté au réseau sans fil est associé à un service donné via une communication sur un support (150), dans lequel le service donné comporte un flux multimédia ou des informations routières et/ou tout autre service dépendant de la géolocalisation, le procédé comprenant :
- l'envoi d'un premier message à un serveur de géomessagerie (602), le premier message comprenant des données de charge utile (221, 221a) qui sont indicatives d'informations géographiques, un indicateur indiquant le flux multimédia associé aux données de charge utile (221, 221a) lorsque le service comporte un flux multimédia, et un indicateur indiquant une géolocalisation associée aux données de charge utile (221,221a),
- la conversion des données de charge utile (221, 221a) en informations géographiques lorsque les données de charge utile sont reçues du serveur d'informations géographiques (602) ; et mettre à jour et/ou ajouter les informations géographiques stockées dans une base de données,
dans lequel le procédé comprend en outre :
- la détermination d'une validité temporelle (225) associée aux données de charge utile (221, 221a), dans lequel le premier message comprend en outre un indicateur indiquant la validité temporelle (225) associée aux données de charge utile (221, 221a) ; dans lequel la validité temporelle spécifie un moment estimé ou une période de temps pendant laquelle les informations géographiques sous-jacentes aux premières données de charge utile (221) devraient être valides et exactes, et dans lequel les données de charge utile (221, 221a) indiquent une ou plusieurs parmi
- une qualité de service (155, 156) du porteur (150) à travers au moins des parties d'un réseau sans fil (113), et
- une qualité de service (157, 157A) du flux multimédia (151) à travers un réseau sans fil (113).

13. Support de stockage lisible par ordinateur, sur lequel est stocké un programme informatique, dans lequel l'exécution du programme informatique par au moins un processeur amène l'au moins un processeur à mettre en œuvre un procédé tel que mentionné dans l'une quelconque des revendications 10 à 12.
